# EUROPÄISCHE PATENTSCHRIFT

(11) **EP 1 226 706 B1**
(45) Veröffentlichungstag und Bekanntmachung des Hinweises auf die Patenterteilung: **12.03.2003**
(21) Anmeldenummer: 00975989.5
(22) Anmeldetag: 03.11.2000
(51) Int. Cl.: H04M 3/22

(54) **VERFAHREN UND ANORDNUNG ZUR STANDORTUNABHÄNGIGEN ÜBERWACHUNG VON SPRACH- UND/ODER DATENNETZVERBINDUNGEN DURCH BEDARFSTRÄGER**
METHOD AND SYSTEM FOR MONITORING SPEECH AND/OR DATA NETWORK CONNECTIONS IRRESPECTIVE OF LOCATION BY ACOMMISSIONING AGENCY
PROCEDE ET SYSTEME POUR PERMETTRE A UN OFFICE DEMANDEUR DE SURVEILLER DES COMMUNICATIONS, EN TOUT LIEU, SUR UN RESEAU DE TRANSMISSION DE SIGNAUX VOCAUX ET/OU DE DONNEES

(30) Priorität: 05.11.1999 DE 19955018
(43) Veröffentlichungstag der Anmeldung: 31.07.2002
(73) Patentinhaber: GTEN AG, 85737 Ismaning (DE)
(72) Erfinder: HOFFMANN, Paul, 85457 Wörth (DE)
(74) Vertreter: Grape, Knut, Dipl.-Ing.
(86) Internationale Anmeldenummer: EP0010835
(87) Internationale Veröffentlichungsnummer: WO01033822

(56) Entgegenhaltungen:
- EP-A- 0 655 851
- WO-A-96/21982
- YEN S -L ET AL: "INTELLIGENT MTS MONITORING SYSTEM" PROCEEDINGS OF THE ANNUAL INTERNATIONAL CARNAHAN CONFERENCE ON SECURITY TECHNOLOGY,US,NEW YORK, IEEE, Bd. CONF. 28, 12. Oktober 1994 (1994-10-12), Seiten 185-187, XP000492127 ISBN: 0-7803-1925-7

## Beschreibung

Die Erfindung betrifft ein Verfahren zur ortsunabhängigen Überwachung von Sprach- und/oder Datennetzverbindungen gemäß den Merkmalen von Anspruch 1 und eine entsprechende Anordnung gemäß den Merkmalen von Anspruch 28.

Die Gesetzgebung erlaubt im Rahmen des Fernmeldegeheimnisses gemäß Artikel 10 des Grundgesetzes, der Strafprozeßordnung, des Außenwirtschaftsgesetzes, der Fernmeldverkehr-Überwachungs-Verordnung (FÜV) und der Technischen Richtlinie zur Beschreibung der Anforderungen an die Umsetzung gesetzlicher Maßnahmen zur Überwachung der Telekommunikation (TRFÜV), d.h. unter ganz bestimmten Voraussetzungen, die Überwachung von sowohl Sprach- als auch Datenleitungen durch Behörden (Bedarfsträger), wie dem Bundeskriminalamt, Landeskriminalämter, Zollkriminalamt, Verfassungsschutz u.a., jeweils nach Ausstellung einer richterlichen Genehmigung. Anbieter von Netzdiensten, sogenannte Netzbetreiber bzw. Carrier, sind dabei verpflichtet, solche Überwachungen vornehmen zu können. Beispielsweise ist eine Überwachung auf Seiten von ISPn (Internet Service Provider) angezeigt, um die Verbreitung von Pornographie im Internet aufzudecken und/oder zu verfolgen.

Zu diesem Zweck sind derzeit sogenannte systemintegrierte Lösungen bekannt. Diese bekannten Lösungen weisen jedoch nicht zuletzt aufgrund der besonderen konstruktiven Ausgestaltung zum Teil ganz gravierende technische und wirtschaftliche Nachteile auf. An die Überwachung sind zunächst ganz spezielle und jederzeit überprüfbare Bedingungen geknüpft, damit eine solche Überwachung vom Gesetz bzw. von der richterlichen Anordnung abgedeckt ist. So sind ausgesprochen komplexe Ereignisse bei solchen Überwachungsmaßnahmen zu erkennen, herauszufiltern, zu kopieren und über ein geeignetes Netz an einen oder mehrere Bedarfsträger weiterzuleiten, und zwar derart, daß die übermittelte Information dem zu übertragenen Teil des "Orginals" der überwachten Kommunikation an der zu überwachenden Leitung entspricht, allerdings nur der Teil, welcher durch eine entsprechende richterliche Überwachungsmaßnahme abgedeckt ist. Die momentan bekannten systemintegrierten Lösungen sind allenfalls im Bereich von analogen Sprachnetzen vorgesehen und zudem bereits in technischer Hinsicht nicht in der Lage, diesen Anforderungen zu genügen, weil allenfalls bestimmte Adressinformationen zum Zwecke der Vermittlung, aber keine Dateninhalte selbst untersucht werden. Auch eine zuverlässige Identifikation der Information ist bei diesen systemintegrierten Lösungen nicht gegeben. So muß die überwachte Information eindeutig dokumentiert, markiert und mit zum Beispiel amtlichen Zeitstempeln versehen werden, damit sich die Aufzeichnungen gegebenenfalls vor Gericht als Beweis verwenden lassen. Von besonderem Nachteil bei diesen bekannten systemintegrierten Lösungen ist darüber hinaus die Tatsache, daß eine Datenüberwachung von Netzwerkkomponenten im Zweirichtungsverkehr mit einer Sende- und einer Empfangsseite weder vorgesehen noch möglich ist. Gleichzeitig ist bei diesen systemintegrierten Lösungen dem Aspekt des Schutzes gegen Kenntnisnahme der übertragenen Information durch unbefugte Dritte nicht ausreichend Rechnung getragen. Eine unbefugte Kenntnisnahme oder Mitlesen von seiten Dritter bei der Übertragung sind insoweit ohne größeren Aufwand möglich. Schließlich sind solche systemintegrierten Lösungen ausgesprochen kostenintensiv, sämtliche Knoten des jeweiligen Netzbetreibers mit solchen systemintegrierten Lösungen auszustatten und letztendlich zu unterhalten. Beistell-Lösungen zur ortsunabhängigen Überwachung von Sprachund/oder Datennetzverbindungen, die zudem verhältnismäßig kostengünstig sind, sind hingegen bis dato nicht bekannt.

Im Bereich der Datenübertragung ergeben sich darüber hinaus aufgrund der besonderen Charakteristika von Datenübertragungsnetzen zum Teil anders geartete und wesentlich schwieriger zu lösende Problemstellungen. So muß eine passive unauffällige bzw. unbemerkbare Aufschaltung auf die unterschiedlichsten Interfaces mit vielen unterschiedlichen Geschwindigkeiten im Bereich der Weitverkehrsnetze (WAN), der lokalen Netze (LAN) und ATM-Netze (ATM) erfolgen. Mehrere hundert unterschiedliche Netzwerkprotokolle zuzüglich deren Varianten in Abhängigkeit von bestimmten Ereignissen auf Protokollebene und auf Userdaten-Ebene, auch in Form von konditionellen Ereignisabläufen sind zu erkennen, zu filtern und zu kopieren, ohne daß die Überwachungseinrichtung wie eine Übertragungskomponente im Übertragungsnetz (Hubs, Bridges, Router, Switches etc) am Netzprozeß selbst beteiligt ist und somit jederzeit bestimmte Informationen abfragen kann. Dazu besteht die Forderung nach einer Filterung/Extraktion, wenn zum Beispiel auf einer Datenübertragungsleitung eine bestimmte Anzahl von Teilnehmern miteinander kommuniziert, wie das bei paketvermittelten Netzen (zum Beispiel X.25, Frame Relay) der Fall ist, die behördliche angeordnete Überwachung jedoch nur für einen oder mehrere bestimmte Teilnehmer im Netzgeschehen gilt. Insoweit ergeben sich besondere Schwierigkeiten in dem Fall, wenn zum Beispiel auf einer Datenübertragungsleitung eine bestimmte Anzahl von Teilnehmern miteinander kommuniziert, wie bei paketvermittelten Netzen (zum Beispiel X.25, Frame Relay, die behördliche angeordnete Überwachung jedoch nur für einen oder mehrere bestimmte Teilnehmer im Netzgeschehen gilt. Eine Einfügung von eindeutigen Bezeichnungen und von amtlichen Zeitstempeln zur Identifikation der Daten in den Datenstrom ist darüber hinaus vorgeschrieben. Diese Ergänzungen müssen jedoch so eingefügt werden, daß keine Beeinflussung der Integrität der überwachten Daten und auch keine zeitliche Verfälschung stattfindet. Bei der Weiterleitung der relevanten Datenkommunikation über sogenannte Transitnetze an den/die Bedarfsträger kann das Netz der zu überwachenden Verbindung aus wirtschaftlichen Gründen ein anderes Netz sein, als das Transitnetz zur Übermittlung der Daten an den/die Bedarfsträger. So kann zum Beispiel die Überwachung einer X.25-Verbindung angeordnet sein. Die zur Überwachung durch einen Bedarfsträger relevanten Daten werden jedoch nur dann, wenn der oder die besagten überwachten Teilnehmer aktiv kommunizieren, über eine zu aktivierende Wählverbindung (zum Beispiel über ein ISDN-Netz) an den/die Bedarfsträger übermittelt.

Darüber hinaus sind in der EP-A-0 833 489 ein Verfahren und eine Anordnung zur Überwachung von digitalen Sprachnetzen und/oder Datennetzverbindungen durch Bedarfsträger beschrieben. Hierbei erfolgt eine passive Aufschaltung auf wenigstens eine zu überwachende digitale bidirektionale Sprach- und/oder Datennetzverbindung durch eine Aufbereitungsvorrichtung. Die für die Überwachung relevanten Informationen werden ausgelesen und von einer Sendevorrichtung über mindestens ein Transitnetz zu einer Empfangsvorrichtung an einem für deren Auswertung vorgesehenen Ort übertragen, wo eine Aufbereitung der übertragenen Informationen erfolgt. Ein wesentlicher Nachteil des bekannten Verfahrens und der bekannten Anordnung besteht darin, daß explizit keine dedizierte Auswahl von zu überwachenden Daten, Ereignissen und/oder Ereignisfolgen auf Protokollebene vorgesehen ist und ebenfalls gemäß gesetzlichen Anforderungen kein ausreichender Schutz gegen Kenntnisnahme der zu übertragenden Information durch unbefugte Dritte gewährleistet ist.

Der Erfindung liegt daher die Aufgabe zugrunde, ausgehend vom oben genannten Stand der Technik, ein Verfahren und eine Anordnung zur ortsunabhängigen Überwachung von digitalen Sprachund/oder Datennetzverbindungen durch Bedarfsträger zur Verfügung zu stellen, mit welcher sich die obigen Nachteile verhindern lassen, welche mithin konstruktiv besonders einfach, zugleich zuverlässig und sicher gegen Eingriffe durch unbefugte Dritte sowie ausgesprochen kostengünstig ist.

Diese Aufgabe wird in verfahrenstechnischer Hinsicht auf überraschend einfache Weise durch die Merkmale des Anspruchs 1 gelöst.

Demnach ist durch die Ausgestaltung des erfindungsgemäßen Verfahrens zur ortsunabhängigen Überwachung von Sprach- und/oder Datennetzverbindungen durch Bedarfsträger, wie dem Bundeskriminalamt, den Landeskriminalämtern, dem Zollkriminalamt, Verfassungsschutz etc., nach richterlicher Genehmigung ein besonders einfaches, zudem ausgesprochen zuverlässiges Verfahren zur unbemerkten Überwachung insgesamt erreicht. Von ganz besonderem Vorteil für unter anderem den Aspekt des Schutzes gegen unbefugte Kenntnisnahme und/oder Manipulation durch Dritte ist dabei, daß bei dem Verfahren nach der Erfindung stets zwei Übertragungseiten (Sende- und Empfangsseite) analysiert, nach entsprechender Filterung kopiert und weitergeleitet werden. Bei der zu überwachenden Verbindung werden sowohl die Sendeals auch die Empfangsdaten jeweils über eine gesonderte Verbindung an den/die Bedarfsträger übermittelt. Mit anderen Worten findet eine Weiterleitung der von der Aufbereitungsvorrichtung ausgelesenen Daten in Form eines doppelten "Einrichtungsverkehrs" (im Gegensatz zu der sonst üblichen Sende/Empfangsrichtungsbidirektionalität bei normalen Kommunikationsprozeßen) in Richtung Bedarfsträger statt. Die Filterung der Daten hat den Nebeneffekt, daß für die Übermittlung der Daten nur die dafür erforderliche Minimal-Bandbreite beansprucht wird. Weiterhin ermöglicht die Bitratenadaption auf Sender- und/oder Empfängerseite eine individuelle Anpassung der Geschwindigkeit an die physikalischen Anforderungen der zwei gesonderten Kanäle. Damit einhergehend läßt sich zugleich ein ausgesprochen kostengünstiges Verfahren zur Überwachung einzelner Sprach- und/oder Datennetzverbindungen erhalten, da eine Überwachung gezielt nur an den jeweils erforderlichen Stellen vorgenommen werden kann.

Weitere ganz besonders vorteilhafte Einzelheiten des erfindungsgemäßen Verfahrens zur ortsunabhängigen Überwachung von Sprach- und/oder Datennetzverbindungen durch Bedarfsträger sind in den Ansprüchen 2 bis 27 beschrieben.

Diese Aufgabe wird weiterhin in anordnungstechnischer Hinsicht auf überraschend einfache Weise durch die Merkmale des Anspruchs 28 gelöst.

Demnach ist eine Anordnung zur ortsunabhängigen Überwachung von Sprach- und/oder Datennetzverbindungen durch Bedarfsträger, wie dem Bundeskriminalamt, den Landeskriminalämtern, dem Zollkriminalamt, Verfassungsschutz etc., nach richterlicher Genehmigung, insbesondere zur Durchführung des vorgenannten Verfahrens vorgesehen. Neben den vorgenannten Vorteilen handelt es sich bei der erfindungsgemäßen Anordnung zur Überwachung um eine sogenannte reine Beistell-Lösung, die konstruktiv besonders einfach ist und als sogenannte "Black Box" schnell sowie variabel an beliebiger Stelle einsetzbar ist. Die Anordnung nach der Erfindung ist somit kein fester Bestandteil des bzw. der Netzknoten. In diesem Zusammenhang ist von besonderem Vorteil, daß sämtliche Komponenten der erfindungsgemäßen Anordnung unabhängig vom jeweils eingesetzten Netzknoten der verschiedenen Hersteller arbeiten. Zudem handelt es sich bei der erfindungsgemäßen Anordnung zur standortunabhängigen Überwachung von Sprach- und/oder Datennetzverbindungen um die bisher einzige Anordnung, die vom Bundesministerium für Wirtschaft und Technologie nach Überprüfung auf der Grundlage der Fernmeldeverkehr-Überwachungs-Verordnung (FÜV) und der Technischen Richtlinie zur Beschreibung der Anforderungen an die Umsetzung gesetzlicher Maßnahmen zur Überwachung der Telekommunikation (TRFÜV) zugelassen wurde.

Ganz besonders vorteilhafte konstruktive Einzelheiten der erfindungsgemäßen Vorrichtung sind in den Ansprüchen 29 bis 52 beschrieben.

Weitere Merkmale, Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: ein schematisches Blockdiagramm einer erfindungsgemäßen Ausführungsform einer Anordnung zur ortsunabhängigen Überwachung von Sprach- und/oder Datennetzverbindungen durch Bedarfsträger nach der Erfindung,
- Fig. 2: ein schematisches Blockdiagramm der erfindungsgemäßen Ausführungsform der Anordnung zur ortsunabhängigen Überwachung von Sprach- und/oder Datennetzverbindungen nach der Erfindung entsprechend der Fig. 1 in größerem Detail,
- Fig. 3: ein schematisches Blockdiagramm einer erfindungsgemäßen Ausführungsform einer Aufbereitungsvorrichtung der erfindungsgemäßen Anordnung zur ortsunabhängigen Überwachung von Sprach- und/oder Datennetzverbindungen nach den Fig. 1 und 2,
- Fig. 4: ein schematisches Blockdiagramm einer erfindungsgemäßen Ausführungsform einer Sendevorrichtung der erfindungsgemäßen Anordnung zur ortsunabhängigen Überwachung von Sprach- und/oder Datennetzverbindungen nach den Fig. 1 und 2, und
- Fig. 5: ein schematisches Blockdiagramm einer erfindungsgemäßen Ausführungsform einer Empfangsvorrichtung der erfindungsgemäßen Anordnung zur ortsunabhängigen Überwachung von Sprach- und/oder Datennetzverbindungen nach den Fig. 1 und 2.

Bei der nachfolgenden Beschreibung einer Ausführungsform der erfindungsgemäßen Anordnung 10 zur ortsunabhängigen Überwachung von Sprach- und/oder Datennetzverbindungen durch Bedarfsträger nach der Erfindung sind einander entsprechende, gleiche Bauteile jeweils mit identischen Bezugsziffern versehen.

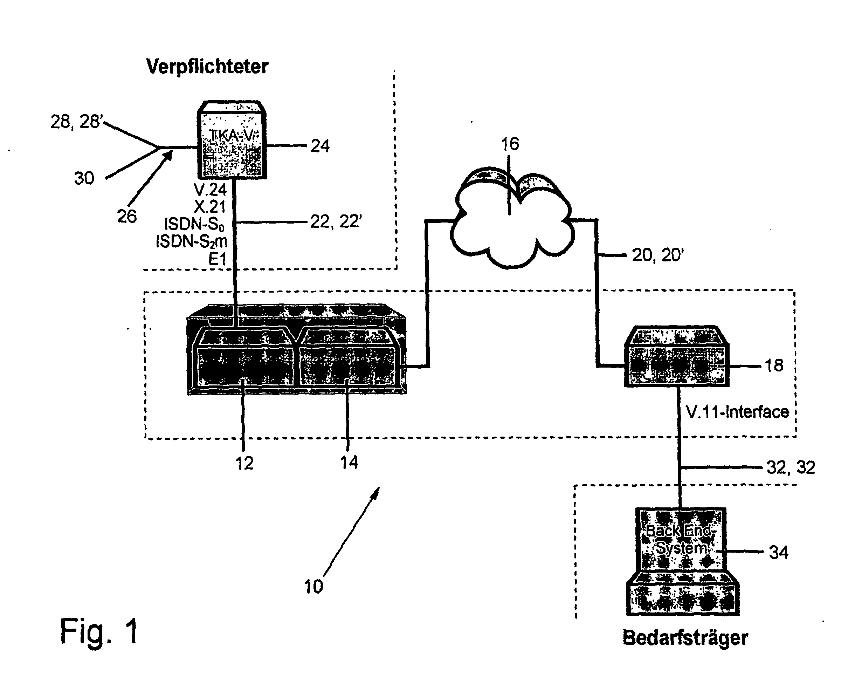

Wie aus der Fig. 1 hervorgeht umfaßt die erfindungsgemäße AnOrdnung 10 eine Aufbereitungsvorrichtung 12, eine Sendevorrichtung 14 und eine mit der Sendevorrichtung 14 über wenigstens ein Transitnetz 16 kommunizierende und zusammenwirkende Empfangsvorrichtung 18.

Das wenigstens eine Transitnetz 16 weist mindestens zwei Kanäle 20, 20' auf, über welche die Übertragung von Daten, Ereignissen und Ereignisfolgen zwischen der Sendevorrichtung 14 und der Empfangsvorrichtung 18 stattfindet.

Die Aufbereitungsvorrichtung 12 ist über ebenfalls wenigstens zwei Kanäle (Senden und Empfang) 22, 22' mit einer Telekommunikationsanlage 24 eines Verpflichteten, beispielsweise eines Carriers oder Internet-Providers, verbunden. Die Telekommunikationsanlage 24 umfaßt wiederum wenigstens eine, meist jedoch viele, zu überwachende Sprach- und/oder Datennetzverbindung 26 mit ebenfalls wenigstens zwei Kanälen 28, 28', die zu dem zu überwachenden Anschluß 30 führen.

Die Empfangsvorrichtung 18 ist über ebenfalls wenigstens zwei Kanäle 32, 32' mit einem Back End-System 34, zum Beispiel einem Aufzeichnungs- und Wiedergabegerät, einem speziellem Analysator oder einem prozeßgesteuerten Nachbearbeitungssystem oder dergleichen, eines oder mehrerer Bedarfsträger, wie dem Bundeskriminalamt, den Landeskriminalämtern, dem Zollkriminalamt, Verfassungsschutz etc. verbunden.

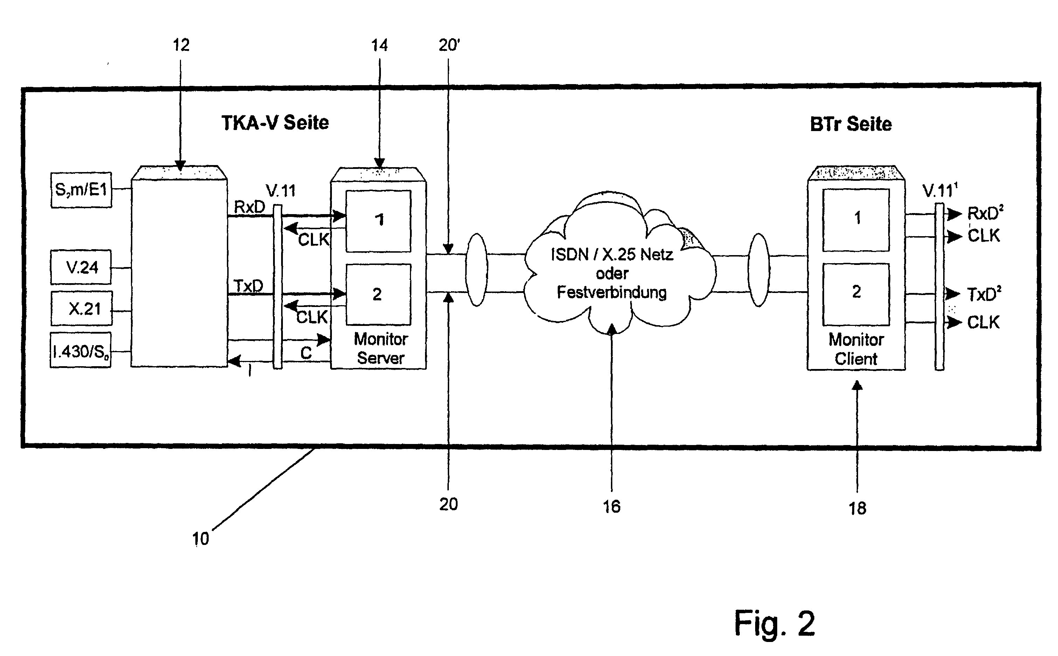

Wie der Fig. 2 deutlich zu entnehmen ist, sind bei der erfindungsgemäßen Anordnung 10 jeweils zwei Kanäle 20, 20', 22, 22', 28, 28' und 32, 32' vorgesehen, um die Sprach- und/oder Datennetzverbindungen 26 in bidirektionaler Richtung, also sowohl auf der Empfangsseite (Receive Channel oder "R") als auch der Sendeseite (Send Channel oder "S"), zu überwachen.

Mithin besteht die Anordnung 10 nach der Erfindung im wesentlichen aus drei Bestandteilen, nämlich der Aufbereitungsvorrichtung 12, der Sendevorrichtung 14 und der Empfangsvorrichtung 18, deren Aufgaben und Funktionsweisen sich wie folgt zusammenfassen lassen. Die entsprechenden Bauteile werden im Anschluß daran näher erläutert.

Die Aufbereitungsanordnung 12 wird hochohmig und passiv sowie unbemerkt an die Schnittstelle angeschaltet, über die die Telekommunikation des zu überwachenden Anschlusses 30 geführt wird.

Sie erkennt die zu überwachende Telekommunikation unabhängig vom Typ des zu überwachenden Anschlusses 30 und fertigt eine Kopie dieser Telekommunikation an. Die Aufbereitungsanordnung 12 reicht die Kopie der zu überwachenden Telekommunikation an die weitervermittelnde Sendevorrichtung 14 weiter.

Taktdifferenzen zwischen dem zu überwachenden Anschluß 30 und dem Transitnetz 16 gleicht die Sendevorrichtung 14 durch einen Speicher, zum Beispiel einen elastischen Buffer von 8 MB, aus.

Die Aufbereitungsanordnung 12 ist mit Hilfe der zahlreichen verfügbaren Interface-Modulen und der nachgeschalteten Einrichtungen in der Lage sich in eine beliebige Datenkommunikation (Frame-Strukturen, Protokollstrukturen, sonstige Inhalte) einzusynchronisieren.

Danach beginnt ein sogenannter Capture-Prozeß in den Speicher der Aufbereitungsvorrichtung 12. Parallel dazu können mittels einfacher miteinander verknüpfbarer Extraktionsanweisungen beliebige Informationsinhalte zuerst gefiltert und anschließend extrahiert werden. Eine solche Filterung bietet sich an, um nur wichtige Ereignisse zu extrahieren und zu übermitteln, dient aber vor allem der Wahrung des Fernmeldegeheimnisses, so daß nur die von einer gesetzlich erlaubten Überwachungsmaßnahme betroffene Telekommunikation herausgefiltert wird.

Die Kopie dieser an einen oder mehrere Bedarfsträger (BKA, LKA, ZKA etc.) zu übermittelnden Inhalte wird mit exakten Zeitstempeln und weiteren Informationen (wie zum Beispiel in der TRFÜV vorgeschrieben) versehen und richtungsgetrennt (Sende- und Empfangsinformationen der Datenverbindung) an die Sendevorrichtung 14 weitergeleitet.

Die Aufgaben der Aufbereitungsanordnung 12 kann man also grob wie folgt zusammenfassen: Interface-Adaption/Aufschaltung auf eine Vielzahl von Interfaces von Datenleitungen (WAN/LAN/ATM), Synchronisation auf Datenframes und Pakete, Capturing von Protokollen und Daten, Erkennung und Dekodierung von Übertragungsprotokoilen (einige 100 plus Variationen), Triggerung auf beliebige Ereignisse und Ereignisfolgen, Filterung beliebiger Inhalte von Protokollen und Daten, Extraktion der relevanten Telekommunikation, Kopieren von ungefilterten oder gefilterten Datenströmen in den Buffer der Aufbereitungsvorrichtung 12, Einfügen von Dokumentation für die eindeutige Zuordnung zur Datenquelle, Einfügen von Zeitstempeln für die Beweisführung (DCF77 Zeit), Takt-Synchronisierung/-Resynchronisierung und Weiterleitung der Sende- und Empfangsdaten an die Sendevorrichtung 14.

Die Sendevorrichtung 14 übernimmt an Ihren beiden Eingängen (Sende- und Empfangsinformationen) die Daten von der Aufbereitungsvorrichtung 12.

Die Sendevorrichtung 14 nimmt die Anpassung an unterschiedliche Netztopologien der Transitnetze 16 und die Authentifizierung vor.

Für die Empfangs- und Sendedaten des zu überwachenden Anschlusses 30 wird je eine Wähl- oder Festverbindung verwendet.

Aufgabe der Sendevorrichtung 14 besteht dabei weiterhin, die Daten so zu segmentieren, daß ein Transport über ein Transitnetz 16 gewährleistet ist.

Die Sendevorrichtung 14 übermittelt die zu überwachende Telekommunikation über wenigstens ein Transitnetz 16 an die Empfangsvorrichtung 18, die in räumlicher Nähe zu der Aufzeichnungseinrichtung oder dergleichen Back End-System 34 des Bedarfsträgers zu installieren ist. Die Sendevorrichtung 14 steuert und überwacht den Aufbau/Abbau der Wählverbindungen im Transitnetz 16.

Die Übergabe an ein Transitnetz 16 erfolgt bei Festverbindungen kontinuierlich. Bei Wählnetzen wird nur und stets dann, wenn die Aufbereitungsvorrichtung 12 Daten zur Überspielung bereitstellt, eine Verbindung neu aufgebaut und danach wieder abgebaut.

Nach dem Verbindungsaufbau erfolgt eine Authentifizierung mit der auf der anderen Seite vorhandenen Empfangsvorrichtung 18.

Darüber hinaus werden alle gesetzlich geforderten Fähigkeiten wie das Handling von Closed User Groups (CUG) in den Wählnetzen, wie zum Beispiel ISDN, unterstützt.

Ist die Geschwindigkeit der überwachten Verbindung anders als die Geschwindigkeit der Transitverbindungen 16, übernimmt die Sendevorrichtung 14 auch noch die Bitratenadaption.

Die Sendevorrichtung 14 übernimmt damit unter anderem folgende Aufgaben: Handling von Transitnetzen 16 inklusive der Umformatierung der Datenströme zur Weiterleitung über das Transitnetz 16 in ein für das Transitnetz 16 geeignetes Format, Authentifizierung und Bitratenadaption.

Auf der anderen Seite des Transitnetzes 16, also auf der Seite des/der Bedarfsträger, zum Beispiel dem BKA, LKA, ZKA etc., ist eine Empfangsvorrichtung 18 installiert.

Die Empfangsvorrichtung 18 übernimmt die über das Transitnetz 16 übermittelten Daten der Sendevorrichtung 14 und übernimmt auf ihrer Seite das komplette Handling des Transitnetzes 16 inklusive einer Authentifizierung mit der Sendevorrichtung 14, einer Resegmentierung, der Unterstützung von gesetzlich geforderten Closed User Group-Funktionen sowie einer Bitratenadaption, falls erforderlich.

Am Ausgang der Empfangsvorrichtung 18 steht an einer V.11-Schnittstelle die Kopie einer relevanten Telekommunikation für den Bedarfsträger einschließlich zusätzlicher Informationen, wie sie die TRFÜV vorschreibt, und genauer Zeitstempel zur Verfügung. Diese kann mit beliebigen Back End-Systemen 34 wie Aufzeichnungsgeräten, Nachbearbeitungsgeräten etc. beobachtet und/oder weiterverarbeitet werden.

Aufgrund der Trennung von Sendeinformation und Empfangsinformation bei deren Übertragung ergibt sich bereits ein Schutz, der einen Zugang zu der zu übertragenden wie auch übertragenen Information durch unbefugte Dritte unmöglich macht.

Daneben ist durch das Einbeziehen der Anschlüsse bzw. Kanäle 20, 20' des Transitnetzes 16 sowohl auf Seite der Sendevorrichtung 14 als auch auf Seite der Empfangsvorrichtung 18 in die für Überwachungszwecke eingerichtete Closed User Group (CUG) sowie durch Überprüfung der Calling Party Number ein zusätzlicher, ausgesprochen wirkungsvoller Schutz vor Blockade und vor nicht autorisierter Informationsübermittlung gewährleistet.

Die Empfangsvorrichtung 18 übernimmt unter anderem folgende Aufgaben: Steuerung und Überwachung der Kommunikation mit der Sendevorrichtung 14, Darstellung der zu überwachenden Telekommunikationsanlage 24 in der Form, wie sie der zu überwachende Anschluß 30 in Verbindung mit dem Back End-System 34, wie beispielsweise einem entsprechenden Monitor oder Aufzeichnungsgerät, sendet oder empfängt.

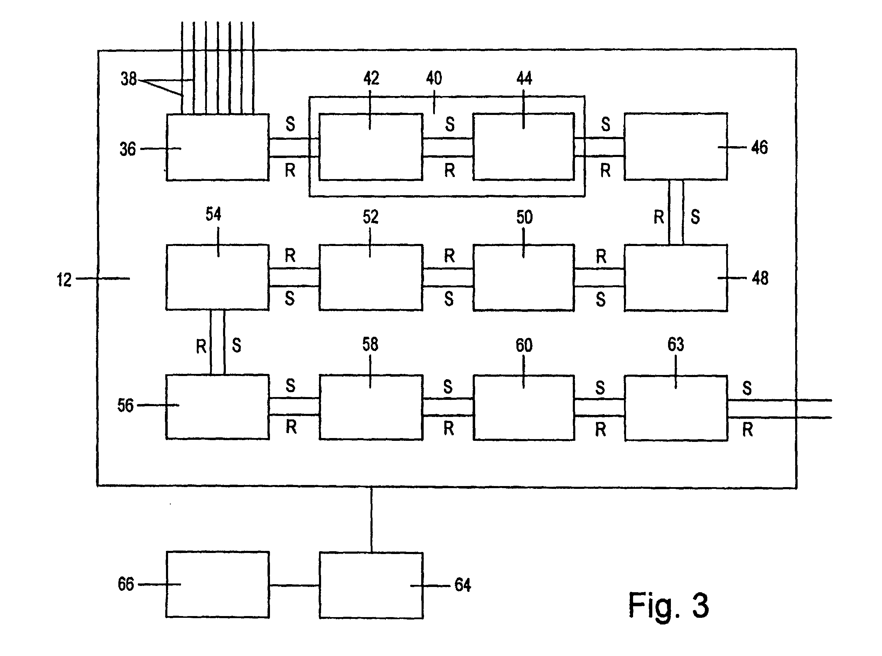

Im folgenden wird der Aufbau der Aufbereitungsvorrichtung 12, der Sendevorrichtung 14 und der Empfangsvorrichtung 18 unter Bezugnahme auf die Fig. 3 bis 5 im Detail beschrieben.

Die Aufbereitungsvorrichtung 12 der erfindungsgemäßen Anordnung 10 umfaßt entsprechend der Fig. 3 eine Einrichtung 36 zur Aufschaltung mit einer Vielzahl von unterschiedlichen Schnittstellenmodulen 38 bzw. Line-Interface-Modulen (LIMen), die für gesetzliche Überwachungsmaßnahmen hochohmig, passiv und unbemerkt auf Sprachen- und/oder Datenverbindungen 26 aufgeschaltet werden. In der Aufbereitungsvorrichtung 12 sind vorzugsweise bis zu 10 solcher verschiedener Interfaces 38 beliebigen Typs angeordnet.

Die Einrichtung 36 zur Aufschaltung ist aus unterschiedlichen Schnittstellentypen für Sprachen- und Datennetzverbindungen 26 in Wide Area Networks (WAN), wie V.24, X.21, V.35, V.36, ISDN-S0, ISDN S2M, E1, und/oder in Local Area Networks (LAN), wie Ethernet, Fast Ethernet oder Token Ring, und/oder in Asynchronous Transfer Mode (ATM), wie OC3/STM 1, UTP-5, DS-3, DS-1, E3, E1, TAXI, gebildet.

Der Einrichtung 36 zur Aufschaltung ist eine Einrichtung 40 zur Synchronisation nachgeschaltet. Die Einrichtung 40 zur Synchronisation besteht aus einem Element 42 zur Frame-Synchronisation auf beliebige Datenübertragungsprotokolle, zum Beispiel im WAN, LAN oder ATM. Das Element 42 zur Frame-Synchronisation kann dabei eine Cyclic Redundanz Check (CRC)-/Frame Check-Sequenz (FCS)-Einrichtung (nicht gezeigt) aufweisen, um Frames bzw. Bitfolgen fehlerfrei lesen und/oder kopieren zu können.

Des weiteren ist die Einrichtung 40 zur Synchronisation mit einem Element 44 zur Protokoll-Synchronisation versehen. Mit der Protokollsynchronisation wird festgestellt, welche WAN/LAN/ATM-Protokolle sich einzeln oder ineinander verschachtelt (encapsulated) in den Frames befinden. Nur so kann ein Capture-Prozeß für die Überwachung mit einer Protokolldekodierung zur klaren Protokoll- und Ereignisdefinition und zur Feststellung der Offset-Adressen für die Nutzdatenpositionen stattfinden.

Die Aufbereitungsvorrichtung 12 umfaßt weiterhin eine Einrichtung 46 zur Auswahl von synchronisierten Protokollen und/oder Daten mit einem Element zur Filterung, einem sogenannten Capture-Filter. Abhängig davon, um welche Überwachungsmaßnahme es sich handelt, wird hier entschieden, welche der aussynchronisierten Protokolle dekodiert werden und auch welche Nutzdaten aus welchen Protokollschichten extrahiert und kopiert werden.

Für die Erkennung der zu überwachenden Telekommunikationsanlage 24 können geeignete Filter definiert werden. Dies ist notwendig, wenn an der Schnittstelle, an welche die Aufbereitungsvorrichtung 12 angeschaltet wird, die Telekommunikation mehrerer Teilnehmer übertragen wird. Der/die Filter stellt/stellen sicher, daß nur die Telekommunikation des in der Überwachungsanordnung genannten Anschlusses zum Bedarfsträger übermittelt wird. Dies hat den Nebeneffekt, daß für die Übermittlung der der zu überwachenden Telekommunikationsanlage 24 im Transitnetz 16 nur die dafür erforderliche Minimal-Bandbreite beansprucht wird.

Folgende Filter können dabei insbesondere verwendet werden: Bei X.25-Festverbindungen (PVC) Filter auf logischer Kanalnummer (LCN), bei X.25-Wählverbindungen (SVC) Filter auf X.25 Nummer, bei Frame Relay Filter auf Data Link Connection Identifier (DLCI), bei ISDN-Wählverbindungen Filter auf Teilnehmernummer (MSN) und bei E1-Verbindungen Filter auf einem oder mehreren Zeitschlitz/en. Beliebige andere Filter- und Filterkombinationen auf Protokoll- oder Nutzdaten-Ebenen, auch miteinander verknüpfbar, können gleichermaßen als Element zur Filterung verwendet werden.

Entsprechend der Fig. 3 ist bei der Aufbereitungsvorrichtung 12 eine Einrichtung 48 zur Lokalisierung bzw. Protokolldekodierung mit einem Element zur Lokalisierung von Protokollschichten gemäß ISO/OSI 1-7 als Vorbereitung für die Trennung der Protokollinhalte und/oder Nutzdaten vorgesehen.

Die Aufbereitungsvorrichtung 12 weist darüber hinaus eine Einrichtung 50 zur Kennzeichnung und Aufbereitung der zu extrahierenden und zu kopierenden Protokollinhalte und/oder Daten bzw. Nutzdaten auf. Gemäß der Entscheidungen in der Einrichtung 46 werden die zu kopierenden Informationen zur Extraktion gekennzeichnet und vorbereitet bzw. getrennt und markiert.

In der Einrichtung 52 zur Extraktion der Daten, Ereignisse und Ereignisfolgen werden die für die jeweilige Überwachung relevanten Daten, Ereignisse und Ereignisfolgen herausgelesen.

Die Aufbereitungsvorrichtung 12 umfaßt einen Speicher 54 zur Abspeicherung der ausgelesenen, für die jeweilige Überwachung relevanten Daten, Ereignisse und Ereignisfolgen. In den Übergabebuffer 54 wird als Vorbereitung für die Anfügung von Dokumentationsinhalten, die gesetzlich in der TRFÜV (technische Richtlinie zur Beschreibung der Anforderungen an die Umsetzung gesetzlicher Maßnahmen zur Überwachung der Telekommunikation) vorgesehen sind, eine Kopie angefertigt.

Die Aufbereitungsvorrichtung 12 umfaßt eine Einrichtung 56 zur Anfügung von Dokumentationsinhalten von gesetzlichen Bestimmungen, wie Maßnahmennummern, Übertragungsrichtungen etc., insbesondere gemäß der Technischen Richtlinie zur Beschreibung der Anforderungen an die Umsetzung gesetzlicher Maßnahmen zur Überwachung der Telekommunikation (TRFÜV), und eine Einrichtung 58 zur Anfügung von Zeitstempeln, die vorzugsweise mittels einer amtlichen Uhr nach DCF77 oder optional nach dem GPS-Standard einstellbar ist.

Zusätzlich ist die Aufbereitungsvorrichtung 12 mit einer Einrichtung 60 zur Taktsynchronisation der beiden Kanäle (send und Receive) für die zu übertragenden Daten, Ereignisse und Ereignisfolgen versehen, falls die Situation (Gitter etc.) es erfordert.

Schließlich sind zwischen der Aufbereitungsvorrichtung 12 und der Sendevorrichtung 14 zur Übertragung der Kanäle bzw. Daten, Ereignisse und Ereignisfolgen über das mindestens eine Transitnetz 16 an die Empfangsvorrichtung 18 zwei Schnittstellen 62 jeweils vom Typ X.21 oder Ethernet angeordnet.

Mittels eines Konfigurationsmoduls 64, auf das über einen Control-Personal-Computer 66 zugegriffen werden kann, welcher auch die Sendevorrichtung 14 konfiguriert, lassen sich die Einrichtungen bzw. Elemente 36 bis 62 einstellen und/oder steuern bzw. überwachen.

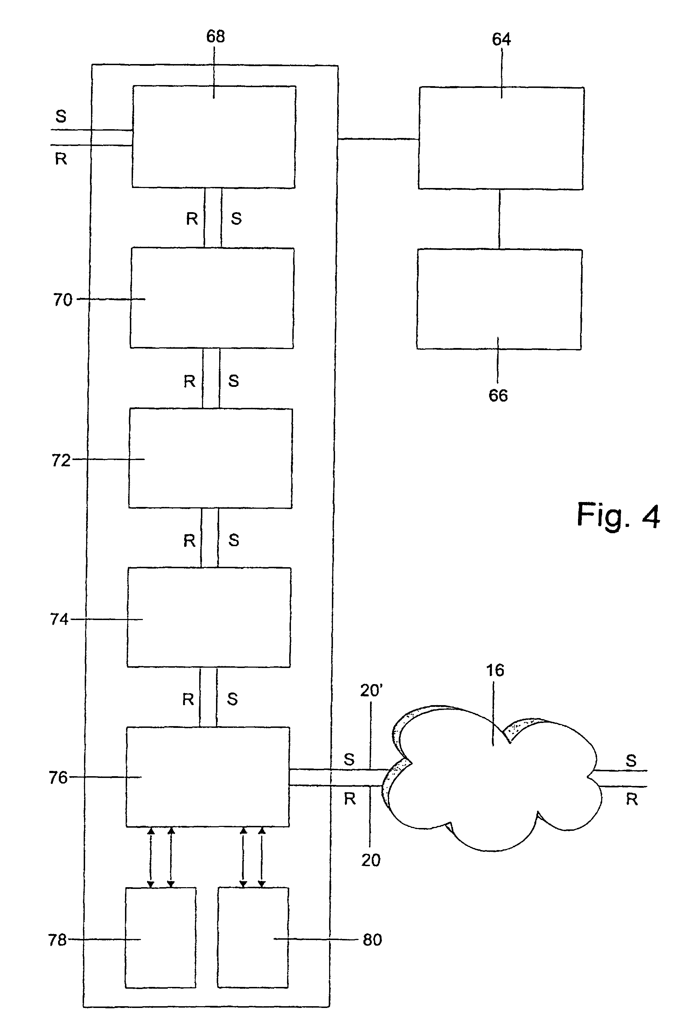

Wie die Fig. 4 zeigt, umfaßt die Sendevorrichtung 14 eine Einrichtung 68 zur Anpassung der übergebenen Daten, Ereignisse und Ereignisfolgen an die Besonderheiten des mindestens einen Transitnetzes 16. Insbesondere dient die Einrichtung 68 dem Reassembly/Assembly der Frames, nämlich der Prüfung und Zerlegung der empfangenen Frames für die Übertragung über das Transitnetz 16. Gegebenenfalls müssen hier die Framelängen an die Vorschriften, Einschränkungen etc. des Transitnetzes 16 für beide Kanäle (Send und Receive) angepaßt werden.

Daran anschließend weist die Sendevorrichtung 14 einen Speicher 70 bzw. Bufferbereich zur Abspeicherung von angepaßten Daten, Ereignisse und Ereignisfolgen bzw. der so vorbereiteten Frames auf.

Die Sendevorrichtung 14 ist entsprechend der Fig. 4 mit einer Einrichtung 72 zur Erstellung eines Transitprotokolls für die zwei Kanäle 20, 20' und zur Zuordnung bzw. Anfügung dessen zu den zu übertragenden Daten, Ereignissen und Ereignisfolgen versehen.

Die Sendevorrichtung 14 ist zudem mit einer dem mindestens einen Transitnetz 16 zugeordneten Cyclic Redundanz Check (CRC)-/Frame Check-Sequenz (FCS)-Einrichtung 74 für die zwei Kanäle 20, 20' zur Überprüfung der gespeicherten Daten, Ereignisse und Ereignisfolgen zum Anfügen der im Transitnetz 16 benötigten Framecheck/Framesicherungssequenz (CRC/FCS) versehen.

Weiterhin ist eine Einrichtung 76 zum Handling des Transitnezes 16 einschließlich der Feststellung der Aufnahmebereitschaft der zwei Kanäle 20, 20' im Transitnetz 16 und zur Flußkontrolle über Folgezähler auf der Ebene 2 gemäß ISO/OSI vor und/oder bei Übertragung der Daten, Ereignisse und Ereignisfolgen und zur Fehlerbehandlung bei der Sendevorrichtung 14 verwirklicht. Die Einrichtung 76 dient zudem einem Recovery und einer eindeutigen Authentifikation zwischen der Sendevorrichtung 14 und der Empfangsvorrichtung 18 inklusive der in der TRFÜV geforderten CUG (Closed Usergroup) in Wählnetzen.

Durch die Einrichtung 78 der Sendevorrichtung 14 erfolgt eine Bitratenadaption, falls die Geschwindigkeit der überwachten Leitung kleiner ist als die des Transitnetzes 16 (zum Beispiel überwachte Leitung = Modemleitung 9600 bps und Übertragung über ISDN-Transitnetz = 2 B-Kanäle mit jeweils 64 kbs).

Die Sendevorrichtung 14 weist schließlich noch eine Einrichtung 80 zur Authentifizierung der zu der wenigstens einen zu überwachenden Sprach- und/oder Datennetzverbindung 26 eingetragenen Teilnehmernummer und/oder der der Sendevorrichtung 14 zugeordneten Empfangsvorrichtung 18 auf. Die Einrichtung 80 stellt die Funktion Closed User Group (CUG) in Wählnetzen sicher, so daß nur Teilnehmer, die beim Netzwerkbetreiber in der gleichen geschlossenen User Group eingetragen sind, miteinander kommunizieren dürfen. So wird die Beteiligung Dritter über die Identifizierung der Teilnehmerrufnummern ausgeschlossen, wie zum Beispiel in der TRFÜV gefordert.

Zusätzlich identifizieren sich die Sendevorrichtung 14 und die Empfangsvorrichtung 18 der Anordnung 10 eigenständig, um auch bei ausgeschalteter, noch nicht aktivierter oder fehlerhafter CUG einen Mißbrauch der Anordnung 10 auszuschließen.

Auf das Konfigurationsmodul 64 kann wiederum mit dem Control-Personal-Computer, der auch die Aufbereitungsvorrichtung 12 kontrolliert, für Änderungen zugegriffen werden. Das Konfigurationmodul 64 kann dann auf die einzelnen Einrichtungen 68 bis 80 zugreifen und notwendige Änderungen vornehmen.

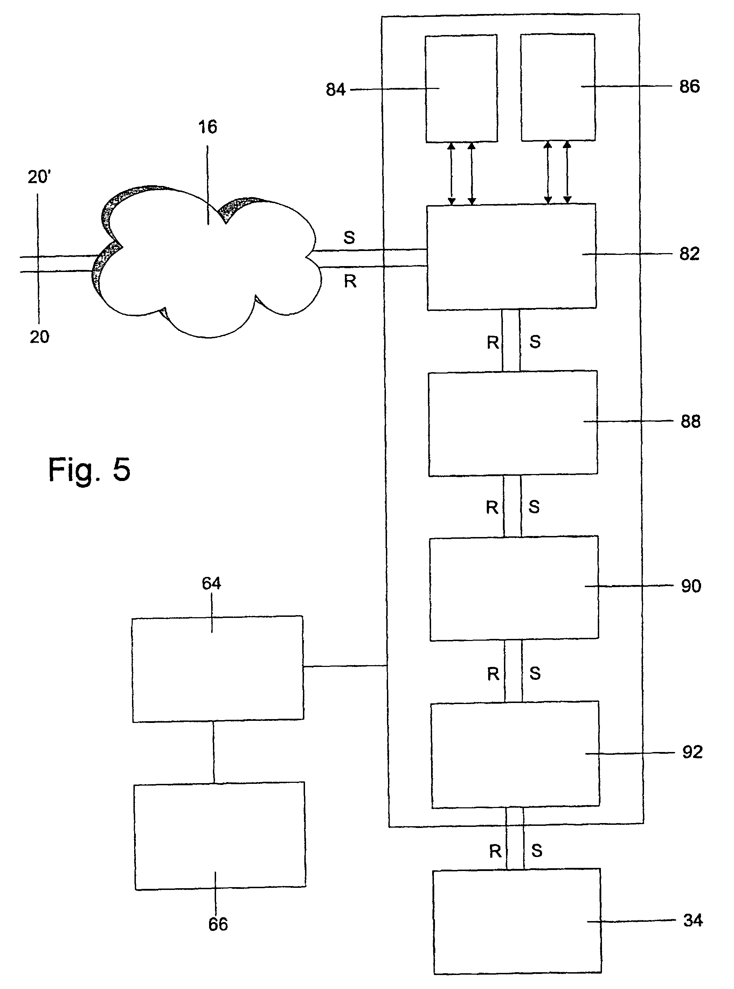

Die Empfangsvorrichtung 18 der Anordnung 10 nach der Erfindung, die in der Fig. 5 gezeigt ist, umfaßt eine Einrichtung 82 zur Überprüfung der Aufnahmebereitschaft der zwei Kanäle 20, 20' im Transitnetz 16 und zur Flußkontrolle über Folgezähler auf der Ebene 2 gemäß ISO/OSI von der Empfangsvorrichtung 18 vor und/oder bei Übertragung der Daten, Ereignisse und Ereignisfolgen und zur Fehlerbehandlung. Die Einrichtung 82 dient zudem einem Recovery und einer eindeutigen Authentifikation zwischen der Sendevorrichtung 14 und der Empfangsvorrichtung 18 inklusive der in der TRFÜV geforderten CUG (Closed Usergroup) in Wählnetzen.

Durch die Einrichtung 84 der Empfangsvorrichtung 18 erfolgt eine Bitratenadaption, falls die Geschwindigkeit der überwachten Leitung kleiner ist als die des Transitnetzes 16 (zum Beispiel überwachte Leitung = Modemleitung 9600 bps und Übertragung über ISDN-Transitnetz = 2 B-Kanäle mit jeweils 64 kbs). Dann werden durch die Einrichtung 84 in der Empfangsvorrichtung 18 die "Füllbytes" wieder entfernt und dem Bedarfsträger nur die ürsprünglichen Daten in einem 9600 bps Datenstrom übergeben.

Die Empfangsvorrichtung 18 weist darüber hinaus eine Einrichtung 86 zur Authentifizierung der zu der wenigstens einen zu überwachenden Sprach- und/oder Datennetzverbindung 26 eingetragenen Teilnehmernummer und/oder der der Empfangsvorrichtung 18 zugeordneten Sendevorrichtung 14 auf. Die Einrichtung 86 stellt die Funktion Closed User Group (CUG) in Wählnetzen sicher, so daß nur Teilnehmer, die beim Netzwerkbetreiber in der gleichen geschlossenen User Group eingetragen sind, miteinander kommunizieren dürfen. So wird die Beteiligung Dritter über die Identifizierung der Teilnehmerrufnummern ausgeschlossen, wie zum Beispiel in der TRFÜV gefordert.

Die Empfangsvorrichtung 18 ist mit einer dem mindestens einen Transitnetz 16 zugeordneten Cyclic Redundanz Check (CRC)-/-Frame Check Sequenz (FCS)-Einrichtung 88 für die zwei Kanäle 20, 20' zur Überprüfung der übertragenen Daten, Ereignisse und Ereignisfolgen und einer Einrichtung 90 zur Entfernung des Transitprotokolls für die zwei Kanäle 20, 20'und zur Zuordnung dessen zu den übertragenen Daten, Ereignissen und Ereignisfolgen versehen. Letztere ist vorgesehen, damit an den Bedarfsträger nur eine Kopie der zu überwachenden bzw. überwachten Leitung 26 übergeben werden kann.

Schließlich weist die in der Fig. 5 gezeigte Ausführungsform der Empfangsvorrichtung 16 noch eine Einrichtung 92 zur Umund/oder Rückformatierung der übertragenen Daten, Ereignisse und Ereignisfolgen entsprechend denjenigen der überwachten Sprach- und/oder Datennetzverbindungen 26 auf. Die Einrichtung 90 zur Assembly/Reassembly nimmt die "Um- und Rückformatierung" aller für die Übertragung über das Transitnetz 16 notwendigen Umformatierungen im Vergleich mit der zu überwachenden Leitung 26 vor.

Auf das Konfigurationsmodul 64 kann wiederum mit dem Control-Personal-Computer 66, der auch die Aufbereitungsvorrichtung 12 kontrolliert, für Änderungen zugegriffen werden. Das Konfigurationmodul 64 kann dann auf die einzelnen Einrichtungen 82 bis 92 zugreifen und notwendige Änderungen vornehmen.

Im Ergebnis zeichnet sich das Verfahren und die Anordnung nach der Erfindung durch folgende besondere Vorteile auf:
a) Einsetzbarkeit nicht nur an und/oder in bestimmten Netzen/Leitungen mit bestimmten Schnittstellen und Protokollen, sondern modular und flexibel an allen Datenübertragungsnetzen mit niedrigen Geschwindigkeiten von 300 bps bis 64 Kbps über gängige Geschwindigkeiten 9.600 bps, 19.600 bps, 28.800 bps, 57.600 bps usw. bis hinauf zur Aufschaltung der Einrichtung auf Internet-Backbones mit Geschwindigkeiten von 2 Mbps, 34 Mbps und sogar 2,4 Gbps, wie sie zwischen den Internet Service-Providern eingesetzt werden.
b) Dekodierung von einigen hundert verschiedenen Datenübertragungsprotokollen.
c) Erkennung von Ereignissen nicht nur auf Schnittstellenebene, sondern auch innerhalb von Protokollen und Nutzdaten, angefangen von der Ebene 1 laut OSI/ISO bis hin zur Ebene 7, also Applikationen und Userdaten.
d) Reaktion nicht nur auf Signale im Netz und gegebenenfalls noch auf Codeworte, sondern beliebige Aktivierbarkeit durch zahlreiche Matches jeder Art, die sogar miteinander verknüpfbar sind.
e) Filterung/Extraktion bestimmter für die gesetzlichen Überwachungsmaßnahmen relevanter Ereignis- und Dateninhalte, unabhängig davon, auf welcher "Ebene" sich die Information im Protokoll und den Nutzdaten befindet.
f) Weiterleitung des Überwachungsergebnisses über unterschiedliche Transitnetze (Festverbindungen, Wählverbindungen, Paketdienste wie X.25, Frame Relay).
g) Weiterleitung des Überwachungsergebnisses mittels besonderer Verschlüsselungstechnik an den/die Bedarfsträger auch über das Internet selbst (Bedarfsträger bilden somit ein VPN (virtual privat network)).
h) Einfügen von Beschreibungen/Bezeichnungen in den Datenstrom für die Übermittlung an den/die Bedarfsträger zur Eindeutigkeit und zur Beweisführung vor Gericht.
i) Einfügen von eindeutigen Zeitstempeln für die eindeutige Ereignisverfolgung und zur Beweisführung vor Gericht.
j) Sichersstellung der Vertraulichkeit mittels Handling von Closed User Group-Netzdiensten gemäß der gesetzlichen Forderungen und/oder getrennte Übertragung über zwei getrennte Sende- und Empfangskanäle.

Anhand der beiden nachfolgenden Beispiele 1 und 2 werden das Überwachungsverfahren bzw. die Überwachungsanordnung nach der Erfindung weiter erläutert:

### Beispiel 1

Auf einer Verbindung zwischen einem Netzknoten des Netzwerkanbieters und einem ausgelagertem Netzknoten (zum Beispiel in einem Industriegebiet) auf der Basis einer X.25-Daten-Paketvermittlung soll bei Zustandekommen einer Verbindung mit einer oder zwei bekannten Teilnehmeradressen (Rufende Nr., Gerufene Nr. oder auf beide gerichtet) die nachfolgende Kommunikation herausgefiltert, extrahiert und weitergeleitet werden, weil mit dieser Datenverbindung kriminelle Aktionen vorbereitet werden.

Das erfindungsgemäße Anordnung kann deshalb bei jedem beliebigen Mehrfachprotokollgemisch, wie es bei einer Überleitung LAN/WAN/ATM häufig vorkommt (zum Beispiel Ethernet, ARP, RIP, UTP/TCP, RTCP, Netbios, HDLC, X.25), die Adressmatches auf die Teilnehmeradressen jederzeit realzeitorientiert und ausgesprochen zuverlässig beherrschen, unabhängig von der Netzlast, dann die zugeteilten eindeutigen Prozeßzuweisungen, wie den logischen Kanal dieser Telekommunikationsverbindung bei X.25, von Anfang bis Ende nachverfolgen, filtern und zur Weiterleitung extrahieren, einschließlich der Bereitstellung und Vorbereitung für die erforderliche Dokumentation. Eine Kenntnis von Routing- und Switchingtabellen der Netzwerkkomponenten ist somit nicht erforderlich.

### Beispiel 2

Drogenhandel, Waffenhandel oder Kinderpornographie wird über das relativ anonyme Internet getätigt bzw. verbreitet. Da von den ISPn für bestimmte Verbindungen dynamische IP-Adressen verteilt werden, können die Täter nicht über eine eindeutig zuordnenbare Adressenfilterung überführt werden.

Die erfindungsgemäße Anordnung kann in diesem Fall realtimeorientiert auf mehreren Internetports oder Internet Highways (zum Beispiel UUNET-Backbones) zu den ISPn nach einer Mailadresse, einem Buzzword (zum Beispiel der Bezeichnung einer Droge oder einer Teile-Nr. eines Waffenersatzteils) oder einer Mailadresse suchen. Danach kann die Anordnung diese Kommunikationsverbindung aufgrund der ermittelten dynamischen Adresse zuverlässig bis zum Ende der Kommunikation weiterverfolgen und die Inhalte an Bedarfsträger weiterleiten, auch wenn dieses eine Suchmerkmal (Buzzword, Bezeichnung der Droge, Teile-Nr. etc.) nur einmal in einem Frame/Paket vorkommt. Dies auch oder gerade, wenn diese Suchbegriffe in Protokollebenen oder Nutzdaten eingebunden sind, die für die Komponenten im Netz selbst nicht erreichbar sind.

Viele Komponenten, wie Router, Switches etc., im Netz arbeiten heute nach dem sogenannten Cut Through-Verfahren, was bedeutet, daß die Frames/Datenpakete nach Sichtung der Adressinformationen aus den unteren Protokollschichten ohne jede weitere Sichtung und Analyse an die nächste Komponente im Netz weitergeleitet werden. Auf diese Weise wird vermieden, daß einerseits wichtige Übertragungszeit verloren geht und sich somit die Wirtschaftlichkeit von Datennetzen verschlechtert. Andererseits ist eine Einsichtnahme in die Nutzdaten ausgeschlossen.

Die Erfindung ist nicht auf die dargestellte Ausführungsform der Anordnung 10, die in den Fig. 1 bis 5 gezeigt ist, beschränkt. So ist es möglich, einzelne Bestandteile der Aufbereitungsvorrichtung 12 bzw. der Sendevorrichtung 14 bzw. der Empfangsvorrichtung 18 jeweils untereinander in beliebiger Weise zu verknüpfen. Insoweit können die einzelnen Bestandteile anstelle einer seriellen Anordnung, die ausschließlich aus Gründen einer vereinfachten Darstellungsweise gewählt ist, zueinander ebenso parallel und/oder seriell etc. angeordnet sein. Enbenso ist es denkbar, daß mehrere Aufbereitungsvorrichtungen 12 zueinander kaskadierbar sind.

Schließlich ist die erfindungsgemäße Anordnung 10 bereits ohne weiteres in der Lage, die von der Auufbereitungsvorrichtung 12 zur Verfügung gestellten Informationen anstatt zum Beispiel über ein Transitnetz 16, das als WAN ausgebildet ist, auch über Internet an den/die Bedarfsträger weiterleiten.

## Patentansprüche

1. Verfahren zur ortsunabhängigen Überwachung von Sprachund/oder Datennetzverbindungen durch das Bundeskriminalamt, die Landeskriminalämter, das Zollkriminalamt, den Verfassungsschutz und staatliche, halbstaatliche sowie private Bedarfsträger oder Organisationen nach richterlicher Genehmigung, umfassend folgende Schritte:
- Passive Aufschaltung auf wenigstens eine zu überwachende digitale bidirektionale Sprach- und/oder Datennetzverbindung (26) durch eine Aufbereitungsvorrichtung (12),
- passive Synchronisation auf beliebige Datenübertragungsprotokollen und Datenframes durch die Aufbereitungsvorrichtung (12),
- Auswahl, Lokalisierung und Trennung von synchronisierten Protokollen und/oder Daten durch die Aufbereitungsvorrichtung (12), wobei bei der Auswahl der synchronisierten Protokolle und/oder Daten eine Filterung zur Bestimmung von zu dekodierenden, synchronisierten Protokollen und aus ausgewählten Protokollschichten zu extrahierenden und zu kopierenden Daten vorgenommen wird,
- Auslesen der für die Überwachung relevanten Daten, Ereignisse und Ereignisfolgen durch die Aufbereitungsvorrichtung (12) und Übergeben der für die Überwachung relevanten Daten, Ereignisse und Ereignisfolgen an eine Sendevorrichtung (14),
- Bitratenadaption durch die Sendevorrichtung (14),
- nach Sende- und Empfangsdaten, -ereignissen und -ereignisfolgen getrennte Übertragung der ausgelesenen Daten, Ereignisse und Ereignisfolgen von der Sendevorrichtung (14) über zwei gesonderte Kanäle mindestens eines Transitnetzes zu einer Empfangsvorrichtung (18) an einem für deren Auswertung vorgesehenen Ort,
- Bitratenadaption durch die Empfangsvorrichtung (18), und
- Aufbereitung und Zusammenführung der getrennt übertragenen Daten, Ereignisse und Ereignisfolgen an dem für die Auswertung vorgesehenen Ort.

2. Verfahren nach Anspruch 1, **dadurch gekennzeichnet, daß** die Aufschaltung durch eine Interface-Adaption für eine Vielzahl von unterschiedlichen Schnittstellenmodule bzw. Line-Interface-Module vorgenommen wird.

3. Verfahren nach Anspruch 2, **dadurch gekennzeichnet, daß** für die Aufschaltung Schnittstellentypen für Sprachen- und Datennetzverbindungen in Wide Area Networks, V.24, X.21, V.35, V.36, ISDN-S0, ISDN S2M, E1, und/oder in Local Area Networks, Ethernet, Fast Ethernet oder Token Ring, und/oder in Asynchronous Transfer Mode, OC3/STM 1, UTP-5, DS-3, DS-1, E3, E1, TAXI, verwendet werden.

4. Verfahren nach einem der Ansprüche 1 bis 3, **dadurch gekennzeichnet, daß** bei der Synchronisation eine Frame-Synchronisation auf beliebige Datenübertragungsprotokolle vorgenommen wird.

5. Verfahren nach Anspruch 4, **dadurch gekennzeichnet, daß** bei der Frame-Synchronisation eine Cyclic Redundanz Check/Frame Check-Sequenz-Überprüfung zur fehlerfreien Lesbarkeit und/oder Kopierbarkeit von Frames durchgeführt wird.

6. Verfahren nach einem der Ansprüche 1 bis 5, **dadurch gekennzeichnet, daß** bei der Synchronisation eine Protokoll-Synchronisation zur Bestimmung einzelner und/oder ineinander verschachtelter Protokolle vorgenommen wird.

7. Verfahren nach einem der Ansprüche 1 bis 6, **dadurch gekennzeichnet, daß** die Lokalisierung der Protokollschichten für die Überwachung gemäß ISO/OSI 1-7 zur Vorbereitung der Trennung der Protokollinhalte und/oder Daten vorgenommen wird.

8. Verfahren nach Anspruch 6 oder 7, **dadurch gekennzeichnet, daß** die zu extrahierenden und zu kopierenden Protokollinhalte und/oder Daten zur Extraktion **gekennzeichnet** und aufbereitet werden.

9. Verfahren nach einem der Ansprüche 1 bis 8, **dadurch gekennzeichnet, daß** die für die jeweilige Überwachung relevanten Daten, Ereignisse und Ereignisfolgen ausgelesen und in einen Speicher der Aufbereitungsvorrichtung (12) zur Vorbereitung für eine Anfügung von Dokumentationshinweisen gemäß gesetzlichen Bestimmungen und/oder der Technischen Richtlinie zur Beschreibung der Anforderungen an die Umsetzung gesetzlicher Maßnahmen zur Überwachung der Telekommunikation kopiert werden.

10. Verfahren nach Anspruch 9, **dadurch gekennzeichnet, daß** die zu übertragenden Daten, Ereignisse und Ereignisfolgen mit Dokumentationshinweisen, Maßnahmennummern und Übertragungsrichtungen entsprechend den gesetzlichen Bestimmungen und/oder der Technischen Richtlinie zur Beschreibung der Anforderungen an die Umsetzung gesetzlicher Maßnahmen zur Überwachung der Telekommunikation versehen werden.

11. Verfahren nach einem der Ansprüche 1 bis 10, **dadurch gekennzeichnet, daß** die zu übertragenden Daten, Ereignisse und Ereignisfolgen mit Zeitstempeln versehen werden.

12. Verfahren nach Anspruch 11, **dadurch gekennzeichnet, daß** die Uhrzeit mittels einer amtlichen Funkuhr und/oder gemäß DCF77 oder GPS-Standard eingestellt wird.

13. Verfahren nach einem der Ansprüche 1 bis 12, **dadurch gekennzeichnet, daß** die Daten, Ereignisse und Ereignisfolgen taktsynchronisiert werden.

14. Verfahren nach einem der Ansprüche 1 bis 13, **dadurch gekennzeichnet, daß** die Daten, Ereignisse und Ereignisfolgen von der Aufbereitungsvorrichtung (12) an die Sendevorrichtung (14) zur Übertragung über das mindestens eine Transitnetz an die Empfangsvorrichtung (18) übergeben werden.

15. Verfahren nach einem der Ansprüche 1 bis 14, **dadurch gekennzeichnet, daß** die übergebenen Daten, Ereignisse und Ereignisfolgen von der Sendevorrichtung (14) an die Besonderheiten des mindestens einen Transitnetzes nach Sende- und Empfangsdaten, -ereignissen und -ereignisfolgen getrennt angepaßt werden.

16. Verfahren nach einem der Ansprüche 1 bis 15, **dadurch gekennzeichnet, daß** die angepaßten Daten, Ereignisse und Ereignisfolgen in einen Speicher der Sendevorrichtung (14) kopiert werden.

17. Verfahren nach einem der Ansprüche 1 bis 16, **dadurch gekennzeichnet, daß** die gespeicherten Daten, Ereignisse und Ereignisfolgen mit einem dem mindestens einen Transitnetz zugeordneten Transitprotkoll für die zwei Kanäle versehen werden.

18. Verfahren nach einem der Ansprüche 1 bis 17, **dadurch gekennzeichnet, daß** die gespeicherten Daten, Ereignisse und Ereignisfolgen mit einer dem mindestens einen Transitnetz zugeordneten Cyclic Redundanz Check-/Frame Check-Sequenz für die zwei Kanäle versehen werden.

19. Verfahren nach einem der Ansprüche 1 bis 18, **dadurch gekennzeichnet, daß** von der Sendevorrichtung (14) vor und/oder bei Übertragung der Daten, Ereignisse und Ereignisfolgen die Aufnahmebereitschaft der zwei Kanäle im Transitnetz und Flußkontrolle über Folgezähler auf der Ebene 2 gemäß ISO/OSI überprüft und gegebenenfalls fehlerbehandelt werden.

20. Verfahren nach einem der Ansprüche 1 bis 19, **dadurch gekennzeichnet, daß** von der Sendevorrichtung (14) eine Authentifizierung der zu der wenigstens einen zu überwachenden Sprach- und/oder Datennetzverbindung (26) eingetragenen Teilnehmernummer und/oder der der Sendevorrichtung (14) zugeordneten Empfangsvorrichtung (18) vorgenommen wird.

21. Verfahren nach einem der Ansprüche 1 bis 18, **dadurch gekennzeichnet, daß** von der Empfangsvorrichtung (18) vor und/oder bei Übertragung der Daten, Ereignisse und Ereignisfolgen die Aufnahmebereitschaft der zwei Kanäle im Transitnetz und Flußkontrolle über Folgezähler auf der Ebene 2 gemäß ISO/OSI überprüft und gegebenenfalls fehlerbehandelt werden.

22. Verfahren nach einem der Ansprüche 1 bis 21, **dadurch gekennzeichnet, daß** von der Empfangsvorrichtung (18) eine Authentifizierung der zu der wenigstens einen zu überwachenden Sprach- und/oder Datennetzverbindung (26) eingetragenen Teilnehmernummer und/oder der der Empfangsvorrichtung (18) zugeordneten Sendevorrichtung (14) vorgenommen wird.

23. Verfahren nach einem der Ansprüche 1 bis 22, **dadurch gekennzeichnet, daß** die übertragenen Daten, Ereignisse und Ereignisfolgen mittels einer dem mindestens einen Transitnetz zugeordneten Cyclic Redundanz Check-/Frame Check Sequenz für die zwei Kanäle überprüft werden.

24. Verfahren nach einem der Ansprüche 1 bis 23, **dadurch gekennzeichnet, daß** die übertragenen Daten, Ereignisse und Ereignisfolgen von dem dem mindestens einen Transitnetz zugeordneten Transitprotkoll für die zwei Kanäle befreit werden.

25. Verfahren nach einem der Ansprüche 1 bis 24, **dadurch gekennzeichnet, daß** die übertragenen Daten, Ereignisse und Ereignisfolgen entsprechend denjenigen der überwachten Sprach- und/oder Datennetzverbindungen um- und/oder rückformatiert werden.

26. Verfahren nach einem der Ansprüche 1 bis 25, **dadurch gekennzeichnet, daß** die übertragenen Daten, Ereignisse und Ereignisfolgen von der Empfangsvorrichtung (18) an eine Einrichtung des Bedarfsträgers zu deren Weiterbe- bzw. verarbeitung bzw. Auswertung weitergeleitet werden.

27. Verfahren nach einem der Ansprüche 1 bis 26, **dadurch gekennzeichnet, daß** die Aufbereitungsvorrichtung (12) und/oder die Sendevorrichtung (14) und/oder die Empfangsvorrichtung (18) durch wenigstens ein Konfigurationsmodul über einen Personalcomputer eingestellt und gesteuert werden.

28. Anordnung zur ortsunabhängigen Überwachung von Sprachund/oder Datennetzverbindungen durch das Bundeskriminalamt, die Landeskriminalämter, das Zollkriminalamt, den Verfassungsschutz und staatliche, halbstaatliche sowie private Bedarfsträger oder Organisationen nach richterlicher Genehmigung, zur Durchführung des Verfahrens nach einem der vorhergehenden Ansprüche, umfassend eine Aufbereitungsvorrichtung (12) mit einer Einrichtung zur passiven Aufschaltung (36) auf wenigstens eine zu überwachende digitale bidirektionale Sprach- und/oder Datennetzverbindung (26), einer Einrichtung (40) zur Synchronisation auf Datenübertragungsprotokollen und Datenframes, einer Einrichtung zur Auswahl, Lokalisierung und Trennung von synchronisierten Protokollen und/oder Daten, wobei die Einrichtung (46) zur Auswahl von synchronisierten Protokollen und/oder Daten ein Element zur Filterung zur Bestimmung von zu dekodierenden, synchronisierten Protokollen und aus ausgewählten Protokollschichten zu extrahierenden und zu kopierenden Daten aufweist, und einer Einrichtung zum Auslesen und Übergeben der für die Überwachung relevanten Daten, Ereignisse und Ereignisfolgen, eine mit der Aufbereitungsvorrichtung (12) verbundene Sendevorrichtung (14) und eine wiederum mit der Sendevorrichtung (14) kommunizierende Empfangsvorrichtung (18) zur nach Sende- und Empfangsdaten, -ereignissen und -ereignisfolgen getrennten Übertragung der ausgelesenen Daten, Ereignisse und Ereignisfolgen von der Sendevorrichtung (14) über zwei gesonderte Kanäle (20, 20') mindestens eines Transitnetzes (16) zu der Empfangsvorrichtung (18) zur Aufbereitung und Zusammenführung der getrennt übertragenen Daten, Ereignisse und Ereignisfolgen an einem für deren Auswertung vorgesehenen Ort, wobei die Sendevorrichtung (14) und die Empfangsvorrichtung (18) eine Einrichtung (78, 84) zur Bitratenadaption aufweisen.

29. Anordnung nach Anspruch 28, **dadurch gekennzeichnet, daß** die Aufbereitungsvorrichtung (12) eine Einrichtung (36) zur Aufschaltung mit einer Vielzahl von unterschiedlichen Schnittstellenmodulen (38) bzw. Line-Interface-Modulen umfaßt.

30. Anordnung nach Anspruch 29, **dadurch gekennzeichnet, daß** die Einrichtung (36) zur Aufschaltung Schnittstellentypen (38) für Sprachen- und Datennetzverbindungen (26) in Wide Area Networks, V.24, X.21, V.35, V.36, ISDN-S0, ISDN S2M, E1, und/oder in Local Area Networks, Ethernet, Fast Ethernet oder Token Ring, und/oder in Asynchronous Transfer Mode, OC3/STM 1, UTP-5, DS-3, DS-1, E3, E1, TAXI, umfaßt.

31. Anordnung nach einem der Ansprüche 28 bis 30, **dadurch gekennzeichnet, daß** die Einrichtung (40) zur Synchronisation ein Element (42) zur Frame-Synchronisation auf beliebige Datenübertragungsprotokolle umfaßt.

32. Anordnung nach Anspruch 31, **dadurch gekennzeichnet, daß** das Element (42) zur Frame-Synchronisation eine Cyclic Redundanz Check-/Frame Check-Sequenz-Einrichtung zur Überprüfung einer fehlerfreien Lesbarkeit und/oder Kopierbarkeit von Frames aufweist.

33. Anordnung nach einem der Ansprüche 28 bis 32, **dadurch gekennzeichnet, daß** die Einrichtung zur Synchronisation ein Element (44) zur Protokoll-Synchronisation zur Bestimmung einzelner und/oder ineinander verschachtelter Protokolle umfaßt.

34. Anordnung nach einem der Ansprüche 28 bis 33, **dadurch gekennzeichnet, daß** die Einrichtung (48) zur Lokalisierung ein Element zur Lokalisierung von Protokollschichten gemäß ISO/OSI 1-7 zur Vorbereitung der Trennung der Protokollinhalte und/oder Daten aufweist.

35. Anordnung nach einem der Ansprüche 28 bis 34, **dadurch gekennzeichnet, daß** eine Einrichtung (50) zur Kennzeichnung und Aufbereitung der zu extrahierenden und zu kopierenden Protokollinhalte und/oder Daten vorgesehen ist.

36. Anordnung nach einem der Ansprüche 28 bis 35, **dadurch gekennzeichnet, daß** die Aufbereitungsvorrichtung (12) einen Speicher (54) zur Abspeicherung der ausgelesenen, für die jeweilige Überwachung relevanten Daten, Ereignisse und Ereignisfolgen umfaßt.

37. Anordnung nach einem der Ansprüche 28 bis 36, **dadurch gekennzeichnet, daß** die Aufbereitungsvorrichtung (12) eine Einrichtung (56) zur Anfügung von Dokumentationsinhalten, Maßnahmennummern und Übertragungsrichtungen entsprechend den gesetzlichen Bestimmungen und/oder der Technischen Richtlinie zur Beschreibung der Anforderungen an die Umsetzung gesetzlicher Maßnahmen zur Überwachung der Telekommunikation umfaßt.

38. Anordnung nach einem der Ansprüche 28 bis 37, **dadurch gekennzeichnet, daß** die Aufbereitungsvorrichtung (12) eine Einrichtung (58) zur Anfügung von Zeitstempeln aufweist, die gemäß DCF77 oder GPS-Standard einstellbar ist.

39. Anordnung nach einem der Ansprüche 28 bis 38, **dadurch gekennzeichnet, daß** die Aufbereitungsvorrichtung (12) eine Einrichtung (60) zur Taktsynchronisation der zu übertragenden Daten, Ereignisse und Ereignisfolgen umfaßt.

40. Anordnung nach einem der Ansprüche 28 bis 39, **dadurch gekennzeichnet, daß** zwischen der Aufbereitungsvorrichtung (12) und der Sendevorrichtung (14) zur Übertragung der Daten, Ereignisse und Ereignisfolgen über das mindestens eine Transitnetz (16) an die Empfangsvorrichtung (18) zwei Schnittstellen jeweils vom Typ X.21 oder Ethernet angeordnet sind.

41. Anordnung nach einem der Ansprüche 28 bis 40, **dadurch gekennzeichnet, daß** die Sendevorrichtung (14) eine Einrichtung (68) zur Anpassung der übergebenen Daten, Ereignisse und Ereignisfolgen an die Besonderheiten des mindestens einen Transitnetzes umfaßt.

42. Anordnung nach einem der Ansprüche 28 bis 41, **dadurch gekennzeichnet, daß** die Sendevorrichtung (14) einen Speicher (70) zur Abspeicherung von angepaßten Daten, Ereignisse und Ereignisfolgen aufweist.

43. Anordnung nach einem der Ansprüche 28 bis 42, **dadurch gekennzeichnet, daß** die Sendevorrichtung (14) mit einer Einrichtung (72) zur Erstellung eines Transitprotokolls für die zwei Kanäle und zur Zuordnung dessen zu den zu übertragenden Daten, Ereignissen und Ereignisfolgen versehen ist.

44. Anordnung nach einem der Ansprüche 28 bis 43, **dadurch gekennzeichnet, daß** die Sendevorrichtung (14) mit einer dem mindestens einen Transitnetz (16) zugeordneten Cyclic Redundanz Check-/Frame Check-Sequenz-Einrichtung (80) für die zwei Kanäle (20, 20') zur Überprüfung der gespeicherten Daten, Ereignisse und Ereignisfolgen versehen ist.

45. Anordnung nach einem der Ansprüche 28 bis 44, **dadurch gekennzeichnet, daß** die Sendevorrichtung (14) eine Einrichtung (76) zur Überprüfung der Aufnahmebereitschaft der zwei Kanäle im Transitnetz und Flußkontrolle über Folgezähler auf der Ebene 2 gemäß ISO/OSI vor und/oder bei Übertragung der Daten, Ereignisse und Ereignisfolgen und zur Fehlerbehandlung aufweist.

46. Anordnung nach einem der Ansprüche 28 bis 45, **dadurch gekennzeichnet, daß** die Sendevorrichtung (14) eine Einrichtung (80) zur Authentifizierung der zu der wenigstens einen zu überwachenden Sprach- und/oder Datennetzverbindung (26) eingetragenen Teilnehmernummer und/oder der der Sendevorrichtung (14) zugeordneten Empfangsvorrichtung (18) aufweist.

47. Anordnung nach einem der Ansprüche 28 bis 46, **dadurch gekennzeichnet, daß** die Empfangsvorrichtung (18) eine Einrichtung (82) zur Überprüfung der Aufnahmebereitschaft der zwei Kanäle im Transitnetz und Flußkontrolle über Folgezähler auf der Ebene 2 gemäß ISO/OSI von der Empfangsvorrichtung (18) vor und/oder bei Übertragung der Daten, Ereignisse und Ereignisfolgen und zur Fehlerbehandlung umfaßt.

48. Anordnung nach einem der Ansprüche 28 bis 47, **dadurch gekennzeichnet, daß** die Empfangsvorrichtung (18) eine Einrichtung (86) zur Authentifizierung der zu der wenigstens einen zu überwachenden Sprach- und/oder Datennetzverbindung (26) eingetragenen Teilnehmernummer und/oder der der Empfangsvorrichtung (18) zugeordneten Sendevorrichtung (14) aufweist.

49. Anordnung nach einem der Ansprüche 28 bis 48, **dadurch gekennzeichnet, daß** die Empfangsvorrichtung (18) mit einer dem mindestens einen Transitnetz (16) zugeordneten Cyclic Redundanz Check-/Frame Check Sequenz-Einrichtung (88) für die zwei Kanäle (20, 20') zur Überprüfung der übertragenen Daten, Ereignisse und Ereignisfolgen versehen ist.

50. Anordnung nach einem der Ansprüche 28 bis 49, **dadurch gekennzeichnet, daß** die Empfangsvorrichtung (18) mit einer Einrichtung (90) zur Entfernung des Transitprotokolls für die zwei Kanäle und zur Zuordnung dessen zu den übertragenen Daten, Ereignissen und Ereignisfolgen versehen ist.

51. Anordnung nach einem der Ansprüche 28 bis 50, **dadurch gekennzeichnet, daß** die Empfangsvorrichtung (18) eine Einrichtung (92) zur Um- und/oder Rückformatierung der übertragenen Daten, Ereignisse und Ereignisfolgen entsprechend denjenigen der überwachten Sprach- und/oder Datennetzverbindungen umfaßt.

52. Anordnung nach einem der Ansprüche 28 bis 51, **dadurch gekennzeichnet, daß** die Aufbereitungsvorrichtung (12) und/oder die Sendevorrichtung (14) und/oder die Empfangsvorrichtung (18) wenigstens ein Konfigurationsmodul (64) zur einzelnen oder gemeinsamen Einstellung und Steuerung über einen Personalcomputer (66) umfaßt/umfassen.

## Claims

1. Procedure for decentralised monitoring of speech and/or data network connections through the Federal Bureau of Criminal Investigation, the regional bureaus of criminal investigation, the customs office of criminal investigation, the Federal Office for the Protection of the Constitution and state-controlled, parastatal as well as private consumers or organisations according to judicial authorisation, comprising the following steps:
- Passive circuit-switching, via a preparation device (12), onto at least one digital bidirectional speech and/or data network connection (26) that is to be monitored,
- passive synchronisation on any data transmission protocols and data frames via the preparation device (12),
- selection, localisation and separation of synchronised protocols and/or data via the preparation device (12), whereby filtration for determination of protocols to be decrypted, synchronised protocols and data to be extracted and copied from selected protocol layers takes place during the selection of synchronised protocols and/or data,
- readout of the data, events and series of events relevant for the monitoring process, via the preparation device (12), delivery of the data, events and series of events relevant for the monitoring process to a transmitting device (14),
- bit rate adaptation via the transmitting device (14),
- separate transmission, according to transmission data and reception data, events and series of events, of the read out data, events and series of events from the transmitting device (14) via two separate channels of at least one transit network to a reception device (18) at a location designated for their analysis,
- bit rate adaptation via the reception device (18), and
- preparation and consolidation of the separately transmitted data, events and series of events at the location designated for the analysis.

2. Procedure according to claim 1, **characterised by** the fact that circuit-switching takes place via an interface adaptation for a multitude of different interface modules or Line Interface Modules.

3. Procedure according to claim 2, **characterised by** the fact that interface types for speech and data network connections in Wide Area Networks, V.24, X.21, V.35, V.36, ISDN-S0, ISDN S2M, E1, and/or in Local Area Networks, Ethernet, Fast Ethernet or Token Ring, and/or in Asynchronous Transfer Mode, OC3/STM 1, UTP-5, DS-3, DS-1, E3, E1, TAXI, are used for circuit-switching.

4. Procedure according to either of the claims 1 to 3, **characterised by** the fact that frame synchronisation on any data transmission protocols is undertaken during synchronisation.

5. Procedure according to claim 4, **characterised by** the fact that a Cyclic Redundancy Check/Frame Check Sequence examination for error-free readability and/or copy-ability of frames is undertaken during frame synchronisation.

6. Procedure according to either of the claims 1 to 5, **characterised by** the fact that protocol synchronisation for determination of individual and/or nested (encapsulated) protocols is undertaken during synchronisation.

7. Procedure according to either of the claims 1 to 6, **characterised by** the fact that localisation of the protocol layers for monitoring in accordance with ISO/OSI is undertaken in preparation for the separation of the protocol contents and/or data.

8. Procedure according to claim 6 or 7, **characterised by** the fact that the protocol contents and/or data due to be extracted and copied is identified and prepared for extraction.

9. Procedure according to either of the claims 1 to 8, **characterised by** the fact that the data, events and series of events relevant for the respective monitoring process are read out and copied into a memory of the preparation device (12) in preparation for attachment of documentation references corresponding with the legal provisions and/or the technical guideline for specification of demands on the realisation of legal measures for monitoring of telecommunications.

10. Procedure according to claim 9, **characterised by** the fact that the data, events and series of events due to be transmitted are provided with documentation references, measure numbers and directions of transmission corresponding with the legal provisions and/or the technical guideline for specification of demands on the realisation of legal measures for monitoring of telecommunications.

11. Procedure according to either of the claims 1 to 10, **characterised by** the fact that the data, events and series of events due to be transmitted are provided with time stamps.

12. Procedure according to claim 11, **characterised by** the fact that the time is set by means of an official radio controlled clock and/or corresponding to DCF77 or GPS standard.

13. Procedure according to either of the claims 1 to 12, **characterised by** the fact that the data, events and series of events are clocked.

14. Procedure according to either of the claims 1 to 13, **characterised by** the fact that the data, events and series of events are transferred from the preparation device (12) to the transmitting device (14) for transmission via the at least one transit network to the reception device (18).

15. Procedure according to either of the claims 1 to 14, **characterised by** the fact that the transferred data, events and series of events are separately adapted by the transmitting device (14), according to transmission and reception data, events and series of events, to the particularities of the at least one transit network.

16. Procedure according to either of the claims 1 to 15, **characterised by** the fact that the adapted data, events and series of events are copied into a memory of the transmitting device (14).

17. Procedure according to either of the claims 1 to 16, **characterised by** the fact that the stored data, events and series of events are provided with a transit protocol for the two channels, which is assigned to the at least one transit network.

18. Procedure according to either of the claims 1 to 17, **characterised by** the fact that the stored data, events and series of events are provided with a Cyclic Redundancy Check/Frame Check Sequence for the two channels, which is assigned to the at least one transit network.

19. Procedure according to either of the claims 1 to 18, **characterised by** the fact that the receptivity of the two channels in the transit network and flow control via sequencers on level 2 in accordance with ISO/OSI is examined and, where appropriate, error-treated by the transmitting device (14) prior to and/or during transmission of the data, events and series of events.

20. Procedure according to either of the claims 1 to 19, **characterised by** the fact that authentication of the subscriber number entered to the at least one speech and/or data network connection (26) due to be monitored and/or of the reception device (18) allocated to the transmitting device (14) is carried out by the transmitting device (14).

21. Procedure according to either of the claims 1 to 18, **characterised by** the fact that the receptivity of the two channels in the transit network and flow control via sequencers on level 2 in accordance with ISO/OSI is examined and, where appropriate, error-treated by the reception device (18) prior to and/or during transmission of the data, events and series of events.

22. Procedure according to either of the claims 1 to 21, **characterised by** the fact that authentication of the subscriber number entered to the at least one speech and/or data network connection (26) due to be monitored and/or of the transmitting device (14) allocated to the reception device (18) is carried out by the reception device (18).

23. Procedure according to either of the claims 1 to 22, **characterised by** the fact that the transmitted data, events and series of events are examined for the two channels by means of the Cyclic Redundancy Check/Frame Check Sequence allocated to the at least one transit network.

24. Procedure according to either of the claims 1 to 23, **characterised by** the fact that the transmitted data, events and series of events are released for the two channels by the transit protocol that is assigned to the at least one transit network.

25. Procedure according to either of the claims 1 to 24, **characterised by** the fact that the transmitted data, events and series of events are newly formatted and/or re-formatted corresponding to those of the monitored speech and/or data network connections.

26. Procedure according to either of the claims 1 to 25, **characterised by** the fact that the transmitted data, events and series of events are forwarded by the reception device (18) to a facility of the consumer in order for them to be processed, further processed or analysed.

27. Procedure according to either of the claims 1 to 26, **characterised by** the fact that the preparation device (12) and/or the transmitting device (14) and/or the reception device (18) are adjusted and controlled by means of at least one configuration module via a personal computer.

28. Arrangement for decentralised monitoring of speech and/or data network connections through the Federal Bureau of Criminal Investigation, the regional bureaus of criminal investigation, the customs office of criminal investigation, the Federal Office for the Protection of the Constitution and state-controlled, parastatal as well as private consumers or organisations according to judicial authorisation, for execution of the procedure in accordance with one of the preceding claims, comprising a preparation device (12) with a facility for passive circuit-switching (36) onto at least one digital bidirectional speech and/or data network connection (26) that is to be monitored, a facility (40) for synchronisation on data transmission protocols and data frames, a facility for selection, localisation and separation of synchronised protocols and/or data, whereby the facility (46) for selection of synchronised protocols and/or data features a filtering element for determination of synchronised protocols to be decrypted and data to be extracted and copied from selected protocol layers, and a facility for reading out and transferring the data, events and series of events relevant for the monitoring process, a transmitting device (14) that is connected with the preparation device (12)and a reception device (18) that in turn communicates with the transmitting device (14)for transmission of the read out data, events and series of events that are separated according to transmission and reception data, events and series of events by the transmitting device (14) via two separate channels (20, 20') of at least one transit network (16) to the reception device (18) for preparation and consolidation of the separately transmitted data, events and series of events at a location designated for their analysis, whereby the transmitting device (14) and the reception device (18) feature a facility (78, 84) for bit rate adaptation.

29. Arrangement according to claim 28, **characterised by** the fact that the preparation device (12) comprises a facility (36) for circuit-switching with a multitude of different interface modules (38) or Line Interface Modules.

30. Arrangement according to claim 29, **characterised by** the fact that the facility (36) for circuit-switching comprises interface types (38) for speech and/or data network connections (26) in Wide Area Networks, V.24, X.21, V.35, V.36, ISDN-S0, ISDN S2M, E1, and/or in Local Area Networks, Ethernet, Fast Ethernet or Token Ring, and/or in Asynchronous Transfer Mode, OC3/STM 1, UTP-5, DS-3, DS-1, E3, E1, TAXI.

31. Arrangement according to either of the claims 28 to 30, **characterised by** the fact that the facility (40) for synchronisation comprises an element (42) for frame synchronisation on any data transmission protocols.

32. Arrangement according to claim 31, **characterised by** the fact that the element (42) for frame synchronisation features a Cyclic Redundancy Check/Frame Check Sequence facility for examination of error-free readability and/or copy-ability of frames.

33. Arrangement according to either of the claims 28 to 32, **characterised by** the fact that the facility for synchronisation comprises an element (44) for protocol synchronisation for determination of individual and/or nested (encapsulated) protocols.

34. Arrangement according to either of the claims 28 to 33, **characterised by** the fact that the facility (48) for localisation features an element for localisation of protocol layers in accordance with ISO/OSI 1-7 for preparation of the separation of the protocol contents and/or data.

35. Arrangement according to either of the claims 28 to 34, **characterised by** the fact that a facility (50) for identification and preparation of the protocol contents and/or data to be extracted and copied is designated.

36. Arrangement according to either of the claims 28 to 35, **characterised by** the fact that the preparation device (12) comprises a memory (54) for storage of the read out data, events and series of events relevant for the monitoring process.

37. Arrangement according to either of the claims 28 to 36, **characterised by** the fact that the preparation device (12) comprises a facility (56) for attachment of documentation contents, measure numbers and directions of transfer in accordance with the legal provisions and/or the technical guideline for specification of demands on the realisation of legal measures for monitoring of telecommunications.

38. Arrangement according to either of the claims 28 to 37, **characterised by** the fact that the preparation device (12) features a facility (58) for attachment of time stamps, which is adjustable according to DCF77 or the GPS standard.

39. Arrangement according to either of the claims 28 to 38, **characterised by** the fact that the preparation device (12) comprises a facility (60) for clocking of the data, events and series of events that are to be transmitted.

40. Arrangement according to either of the claims 28 to 39, **characterised by** the fact that two interfaces, each of the type X.21 or Ethernet, are located between the preparation device (12) and the transmitting device (14) for transmission of the data, events and series of events via the at least one transit network (16) to the reception device (18).

41. Arrangement according to either of the claims 28 to 40, **characterised by** the fact that the transmitting device (14) comprises a facility (68) for adaptation of the delivered data, events and series of events to the particularities of the at least one transit network.

42. Arrangement according to either of the claims 28 to 41, **characterised by** the fact that the transmitting device (14) features a memory (70) for storage of adapted data, events and series of events.

43. Arrangement according to either of the claims 28 to 42, **characterised by** the fact that the transmitting device (14) is provided with a facility (72) for creation of a transit protocol for the two channels and for its allocation to the data, events and series of events that are to be transmitted.

44. Arrangement according to either of the claims 28 to 43, **characterised by** the fact that the transmitting device (14) is provided with a Cyclic Redundancy Check/Frame Check Sequence facility (80) for the two channels (20, 20'), which is allocated to at least the one transit network (16), for examination of the stored data, events and series of events.

45. Arrangement according to either of the claims 28 to 44, **characterised by** the fact that the transmitting device (14) features a facility (76) for examination of the receptivity of the two channels in the transit network and flow control via sequencers on level 2 in accordance with ISO/OSI prior to and/or during transmission of the data, events and series of events and for error-handling.

46. Arrangement according to either of the claims 28 to 45, **characterised by** the fact that the transmitting device (14) features a facility (80) for authentication of the subscriber number entered to the at least one speech and/or data network connection (26) due to be monitored and/or of the reception device (18) that is allocated to the transmitting device (14).

47. Arrangement according to either of the claims 28 to 46, **characterised by** the fact that the reception device (18) comprises a facility (82) for examination of the receptivity of the two channels in the transit network and flow control via sequencers on level 2 according to ISO/OSI of the reception device (18) prior to and/or during transmission of the data, events and series of events and for error-handling.

48. Arrangement according to either of the claims 28 to 47, **characterised by** the fact that the reception device (18) features a facility (86) for authentication of the subscriber number entered to the at least one speech and/or data network connection (26) due to be monitored and/or of the transmitting device (14) allocated to the reception device (18).

49. Arrangement according to either of the claims 28 to 48, **characterised by** the fact that the reception device (18) is provided with a Cyclic Redundancy Check/Frame Check Sequence facility (88), which is allocated to the at least one transit network (16), for the two channels (20, 20') that is allocated to at least the one transit network (16) for examination of the transmitted data, events and series of events.

50. Arrangement according to either of the claims 28 to 49, **characterised by** the fact that the reception device (18) is provided with a facility (90) for removal of the transit protocol for the two channels and for its allocation to the transmitted data, events and series of events.

51. Arrangement according to either of the claims 28 to 50, **characterised by** the fact that the reception device (18) comprises a facility (92) for formatting anew and/or reformatting of the transmitted data, events and series of events in correspondence to those of the monitored speech and/or data network connections.

52. Arrangement according to either of the claims 28 to 51, **characterised by** the fact that the preparation device (12) and/or the transmitting device (14) and/or the reception device (18) comprise(s) at least one configuration module (64) for individual or joint adjustment and control via a personal computer (66).

## Revendications

1. Procédé pour surveiller de façon indépendante du lieu, des liaisons phoniques et /ou de réseaux de données par le bureau des affaires criminelles de l'état fédéral, les bureaux des affaires criminelles des Laender, le bureau de répression des fraudes fiscales, l'institution pour protéger la constitution et des services ou organisations étatiques ou semi-étatiques ainsi que privées, après une autorisation du juge, comprenant les étapes suivantes :
- connexion sur au moins une liaison numérique bidirectionnelle (26) phonique et/ou de réseaux de données au moyen d'un dispositif de traitement (12),
- synchronisation passive sur des protocoles de liaisons de données et/ou structure de données à volonté au moyen d'un dispositif de traitement (12),
- choix, localisation et séparation de protocoles et données synchronisés au moyen d'un dispositif de traitement (12), où on effectue le choix des protocoles et/ou des données synchronisés au moyen d'un filtrage pour déterminer des protocoles à décoder et synchronisés et où on filtre à partir des couches de protocoles choisies des données à extraire et à copier,
- lecture des données, évènements et suites d'événement significatifs pour la surveillance par le dispositif de traitement (12) et transfert des données, évènements et suites d'événement significatifs pour la surveillance à un dispositif d'envoi (14),
- adaptation des taux de bits par le dispositif d'envoi (14),
- transfert des données, d'évènements et de suites d'événements séparément selon les données, les événements et les suites d'évènements d'envoi et de réception au moyen du dispositif d'envoi (14) par l'intermédiaire de deux canaux séparés d'au moins un réseau de transit vers un dispositif de réception (18) situé à un endroit destiné au traitement des données, d'évènements et de suites d'événements,
- adaptation des taux de bits par un dispositif de réception (18), et
- traitement et regroupement des données, des événements et des suites d'événements à l'endroit destiné au traitement.

2. Procédé selon la revendication 1, **caractérisé en ce que** la connexion est effectuée par une adaptation d'interface pour une multitude de modules d'interface différents ou modules d'interface ligne.

3. Procédé selon la revendication 2, **caractérisé en ce que** l'on utilise pour la connexion des types d'interface pour des liaisons phoniques et de réseaux de données dans des «Wide Area Networks», V.24, X.21, V.35, V.36, ISDN-SO, ISDN S2M, E1, et/ou dans des «Local Area Networks» Ethernet, Fast Ethernet ou Token Ring, et/ ou en mode de transfert asynchrone, OC3/STM 1, UTP-5, DS-3, DS-1, E3, E1, TAXI.

4. Procédé selon une des revendications 1 à 3, **caractérisé en ce que** l'on effectue pendant la synchronisation une synchronisation structurelle sur des protocoles de transferts de données à volonté.

5. Procédé selon la revendication 4, **caractérisé en ce que** l'on effectue pendant la synchronisation structurelle de vérification de test de redondance cyclique/une séquence de teste structurelle pour pouvoir lire et /ou copier sans erreur des structures.

6. Procédé selon une des revendications 1 à 5, **caractérisé en ce que** l'on effectue pendant la synchronisation une synchronisation de protocole pour déterminer des protocoles individuels et/ou encastrés l'un dans l'autre.

7. Procédé selon une des revendications 1 à 6, **caractérisé en ce que** l'on localise les couches de protocole pour la surveillance selon ISO/OSI 1-7 pour préparer la séparation des contenus de protocole et/ou de données.

8. Procédé selon la revendication 6 ou 7, **caractérisé en ce que** l'on marque et traite pour l'extraction les contenus et/ou données à extraire et à copier.

9. Procédé selon une des revendications 1 à 8, **caractérisé en ce que** l'on lie les données, évènements et suites d'évènements significatives pour la surveillance respective et les copient dans une mémoire du dispositif de traitement (12) pour préparer une insertion des indications de documentation selon les prescriptions légales et/ou directives techniques pour décrire les exigences respectives pour transformer des mesures légales pour la surveillance des télécommunications.

10. Procédé selon la revendication 9, **caractérisé en ce que** l'on procure les données, les événements et les suites d'évènements avec des indications documentaires, des numéros de mesures et des directions de transmission selon les prescriptions légales et/ou les directives techniques pour décrire les exigences pour transformer des mesures légales pour la surveillance des télécommunications.

11. Procédé selon une des revendications 1 à 10, **caractérisé en ce que** l'on procure les données, les événements et les suites d'évènements à transmettre avec des indications de temps.

12. Procédé selon la revendication 11, **caractérisé en ce que** l'on règle l'heure au moyen d'une horloge radio officielle et/ou selon le procédé DCF77 ou un standard GPS.

13. Procédé selon une des revendications 1 à 12, **caractérisé en ce que** l'on synchronise de façon cadencée les données, les évènements et les suites d'évènements.

14. Procédé selon une des revendications 1 à 13, **caractérisé en ce que** l'on transfert les données, évènements et suites d'évènements à partir du dispositif de traitement (12) vers le dispositif d'envoi (14) pour être transférés via, au moins, un réseau de transit vers le dispositif de réception (18).

15. Procédé selon une des revendications 1 à 14, **caractérisé en ce que** l'on adapte les données, les événements et les suites d'évènements transférés par le dispositif d'envoi (14) aux particularités, d'au moins un réseau de transit séparément selon les données envoyées et reçues, selon les évènements envoyés et reçus et selon les suites d'évènements envoyées et reçues.

16. Procédé selon une des revendications 1 à 15, **caractérisé en ce que** l'on copie les données, les évènements et les suites d'évènements adaptés dans une mémoire du dispositif d'envoi (14).

17. Procédé selon une des revendications 1 à 16, **caractérisé en ce que** l'on procure les données, les événements et les suites d'évènements stockés pour les deux canaux d'un protocole de transit associé à, au moins, un réseau de transit.

18. Procédé selon une des revendications 1 à 17, **caractérisé en ce que** l'on procure les données, les évènements et les suites d'évènements stockés pour les deux canaux d'un test de redondance cyclique/séquence de test de structure associé à, au moins, un réseau de transit.

19. Procédé selon une des revendications 1 à 18, **caractérisé en ce que** le dispositif d'envoi (14) vérifie ou corrige éventuellement, avant et/ou pendant la transmission de données, d'évènements et de suites d'événements, les défaillances de la disponibilité de réception des deux canaux dans le réseau de transit et du contrôle de flux au moyen d'un séquenceur au niveau 2 selon la norme ISO/OSI.

20. Procédé selon une des revendications 1 à 19, **caractérisé en ce que** le dispositif d'envoi (14) effectue une authentification du numéro de participant inscrit d'au moins une liaison phonique et/ou de réseau de données à surveiller et/ou du dispositif de réception (18) associé au dispositif d'envoi.

21. Procédé selon une des revendications 1 à 18, **caractérisé en ce que** le dispositif de réception (18) vérifie ou corrige éventuellement, avant et/ou pendant la transmission de données, d'événements et de suites d'événements, les défaillances de la disponibilité de réception des deux canaux dans le réseau de transit et de contrôle de flux au moyen d'un séquenceur au niveau 2 selon la norme ISO/OSI.

22. Procédé selon une des revendications 1 à 21, **caractérisé en ce que** le dispositif de réception (18) effectue une authentification du numéro de participant inscrit d'au moins une liaison phonique et/ou de réseau de données à surveiller et/ou du dispositif d'envoi (14) associé au dispositif de réception.

23. Procédé selon une des revendications 1 à 22, **caractérisé en ce que** l'on vérifie pour les deux canaux les données, les évènements et les suites d'évènements transmis au moyen d'au moins un test de redondance cyclique/séquence de test de structure associé à au moins un réseau de transit.

24. Procédé selon une des revendications 1 à 23, **caractérisé en ce que** l'on libère pour les deux canaux du protocole de transit associé à au moins un réseaux de transite.

25. Procédé selon une des revendications 1 à 24, **caractérisé en ce que** l'on modifie le formatage et/ou établit le format antérieur pour les données, les évènements et les suites d'évènements selon les formats des liaisons phoniques et/ou de réseaux de données.

26. Procédé selon une des revendications 1 à 25, **caractérisé en ce que** l'on retransmet les données, les évènements et les suites d'événements transmis au moyen du dispositif de réception (18) à une installation de l'organisation pour un traitement ou une évaluation des données, des évènements et des suites d'évènements.

27. Procédé selon une des revendications 1 à 26, **caractérisé en ce qu'**au moins un module de configuration règle ou commande à l'aide d'un ordinateur personnel le dispositif de traitement (12) et/ou le dispositif d'envie (14) et/ou le dispositif de réception.

28. Disposition pour la surveillance, de façon indépendante du lieu, des liaisons phoniques et /ou de réseau de données par le bureau des affaires criminelles de l'état fédéral, les bureaux des affaires criminelles des Laender, le bureau de répression des fraudes fiscales, l'institution pour protéger la constitution et des services ou organisations étatiques ou semi-étatiques ainsi que privées, après une autorisation du juge, laquelle disposition étant destinée à effectuer le procédé selon une des revendications précédentes, comportant un dispositif de traitement (12) avec une installation pour une connexion passive sur au moins une liaison numérique bidirectionnelle (26) phonique et/ou de réseau de données, comportant un dispositif (40) pour une synchronisation sur des protocoles de liaisons de données et des structures de données, un dispositif pour le choix, la localisation et la séparation de protocoles et données synchronisés, où le dispositif (46) pour le choix des protocoles et/ou des données synchronisés présente un élément pour le filtrage destiné à déterminer des protocoles à décoder et synchronisés et des données à extraire et à copier à partir des couches de protocoles choisies, comportant notamment une installation pour la lecture des données, des événements et des suites d'événement significatives pour la surveillance et pour le transfert des données, évènements et suites d'événement significatifs pour surveiller, un dispositif d'envoi (14) connecté au dispositif de traitement (12), et un dispositif de réception (18) communicant à nouveau avec le dispositif d'envoi pour transmettre des données, des évènements et des suites d'évènements séparément selon les données, les évènements et les suites d'événements d'envoi et de réception au moyen du dispositif d'envoi (14) par l'intermédiaire de deux canaux séparés (20, 20') d'au moins un réseau de transit vers un dispositif de réception (18) situé à un endroit destiné au traitement et au regroupement des données, des événements et des suites d'évènements ; où le dispositif de traitement (14) et le dispositif de réception (18) présentent une installation (78, 84) pour l'adaptation des taux de bits par un dispositif de réception (18).

29. Disposition selon la revendication 28, **caractérisé en ce que** le dispositif de traitement (12) comporte une installation (36) pour la connexion avec une multitude de modules d'interface différents (38) ou modules d'interface ligne.

30. Disposition selon la revendication 29, **caractérisé en ce que** l'installation (36) comporte pour la connexion des types d'interface pour des liaisons phoniques et de réseau de données dans des «Wide Area Networks», V.24, X.21, V.35, V.36, ISDN-SO, ISDN S2M, E1, et/ou dans des «Local Area Networks» Ethernet, Fast Ethernet ou Token Ring, et/ ou en mode de transfert asynchrone, OC3/STM 1, UTP-5, DS-3, DS-1, E3, E1, TAXI.

31. Disposition selon une des revendications 28 à 30, **caractérisé en ce que** l'installation (40) pour la synchronisation comporte un élément (42) pour la synchronisation structurelle sur des protocoles de transmissions de données à volonté.

32. Disposition selon la revendication 31, **caractérisé en ce que** l'élément (42) pour la synchronisation structurelle comporte une installation de vérification de test de redondance cyclique/une séquence de teste de structure pour pouvoir vérifier si on peut lire et/ou copier les structures sans erreurs.

33. Disposition selon une des revendications 28 à 32, **caractérisé en ce que** l'installation pour la synchronisation comporte un élément (44) pour la synchronisation de protocole pour déterminer des protocoles individuels et/ou encastrés l'un dans l'autre.

34. Disposition selon une des revendications 28 à 33, **caractérisé en ce que** l'installation (48) pour la localisation comporte un élément de localisation de couches de protocoles selon ISO/OSI 1-7 pour préparer la séparation des contenus de protocole et/ou de données.

35. Disposition selon une des revendications 28 à 34, **caractérisé en ce que** l'on a prévu une installation (50) pour marquer et traiter les contenus de protocole et/ou de données à extraire et à copier.

36. Disposition selon une des revendications 28 à 35, **caractérisé en ce que** le dispositif de traitement (12) comporte une mémoire pour stocker les données, évènements et suites d'évènement lus et significatifs pour la surveillance respective.

37. Disposition selon une des revendications 28 à 36, **caractérisé en ce que** le dispositif de traitement (12) comporte une installation (56) pour ajouter des contenus de documentation, des numéros de mesures et des directions de transmission selon les prescriptions légales et/ou les directives techniques décrivant les exigences pour transformer des mesures légales destinés à la surveillance des télécommunications.

38. Disposition selon une des revendications 28 à 37, **caractérisé en ce que** le dispositif de traitement (12) comporte une installation (58) pour l'adjonction d'indications de temps qui peuvent être réglés selon le procédé DCF77 ou un standard GPS.

39. Disposition selon une des revendications 28 à 38, **caractérisé en ce que** le dispositif de traitement (12) comporte une installation (60) pour une synchronisation cadencée des données, des évènements et des suites d'événements à transmettre.

40. Disposition selon une des revendications 28 à 39, **caractérisé en ce que** l'on a disposé entre le dispositif de traitement (12) et le dispositif d'envoi (14) deux interfaces à chaque fois de type X.21 ou Ethernet pour la transmission de données, d'événements et de suites d'événements à travers au moins un réseau de transit vers le dispositif de réception (18).

41. Disposition selon une des revendications 28 à 40, **caractérisé en ce que** le dispositif d'envoi (14) comporte une installation (68) pour adapter des données, des évènements et des suites d'événements transmis aux particularités d'au moins un réseau de transit.

42. Disposition selon une des revendications 28 à 41, **caractérisé en ce que** le dispositif d'envoi (14) comporte une mémoire (70) pour mémoriser des données, des évènements et des suites d'événements adaptés.

43. Disposition selon une des revendications 28 à 42, **caractérisé en ce que** le dispositif d'envoi (14) est pourvu d'une installation (72) pour établir un protocole de transit pour deux canaux et pour associer ces canaux aux données, aux évènements et aux suites d'événements à transmettre.

44. Disposition selon une des revendications 28 à 43, **caractérisé en ce que** le dispositif d'envoi (14) est pourvu d'une installation de test de redondance cyclique/séquence de test de structure (80), associée à au moins un réseau de transite, pour deux canaux (20, 20') pour vérifier des données, des événements et des suites d'événements à vérifier.

45. Disposition selon une des revendications 28 à 44, **caractérisé en ce que** le dispositif d'envoi (14) comporte une installation (76) pour vérifier la disponibilité de réception de deux canaux dans le réseaux de transit et le contrôle de flux par l'intermédiaire d'un séquenceur au niveaux 2 selon la norme ISO/OSI avant et/ou pendant la transmission de données, évènements et suites d'événements pour le traitement des défaillances.

46. Disposition selon une des revendications 28 à 45, **caractérisé en ce que** le dispositif d'envoi (14) comprend une installation (80) pour l'authentification du numéro de participant inscrit d'au moins une liaison phonique et/ou de réseau de données à surveiller et/ou du dispositif de réception (18) associé au dispositif d'envoi.

47. Disposition selon une des revendications 28 à 46, **caractérisé en ce que** le dispositif de réception (18) comprend une installation (82) pour vérifier la disponibilité de réception de deux canaux dans le réseaux de transit et le contrôle de flux par d'un séquenceur au niveaux 2 selon la norme ISO/OSI avant et/ou pendant la transmission de données, évènements et suites d'événements pour le traitement des défaillances.

48. Disposition selon une des revendications 28 à 47, **caractérisé en ce que** le dispositif de réception (18) comprend une installation (86) pour l'authentification du numéro de participant inscrit d'au moins une liaison phonique et/ou de réseau de données à surveiller et/ou du dispositif de réception (18) associé au dispositif d'envoi.

49. Disposition selon une des revendications 28 à 48, **caractérisé en ce que** le dispositif de réception (18) est pourvu d'une installation de test cyclique/séquence de test de structure (80), associée à au moins un réseau de transit, pour deux canaux (20, 20') pour vérifier des données, des évènements et des suites d'événements à vérifier.

50. Disposition selon une des revendications 28 à 49, **caractérisé en ce que** le dispositif de réception (18) est pourvu d'une installation (90) pour enlever le protocole de transit pour les deux canaux et pour associer ces canaux aux données, aux évènements aux et suites d'événements à transmettre.

51. Disposition selon une des revendications 28 à 50, **caractérisé en ce que** dispositif de réception (18) comporte une installation (92) pour changer le formatage et/ou établir le format antérieur des données, évènements et suites d'événements transmises selon les formats des liaisons phoniques et/ou réseau de données.

52. Disposition selon une des revendications 28 à 51, **caractérisé en ce que** le dispositif de traitement (12) et/ou le dispositif d'envoi (14) et/ou le dispositif de réception (18) comprend/comprennent au moins un module de configuration (64) pour le réglage et la commande individuel ou commun par un ordinateur personnel.
